# EUROPEAN PATENT SPECIFICATION

(11) **EP 4 261 522 B1**
(45) Date of publication and mention of the grant of the patent: **23.09.2026**
(21) Application number: 22167712.3
(22) Date of filing: 11.04.2022
(51) Int. Cl.: G01N 1/36

(54) **METHOD FOR PRODUCING HIGH YIELD CORES FOR USE IN A MICROARRAY BLOCK**
VERFAHREN ZUR HERSTELLUNG VON KERNEN MIT HOHER AUSBEUTE ZUR VERWENDUNG IN EINEM MIKROARRAYBLOCK
PROCÉDÉ DE PRODUCTION DE NOYAUX À HAUT RENDEMENT POUR UNE UTILISATION DANS UN BLOC DE MICRORÉSEAU

(43) Date of publication of application: 18.10.2023
(73) Proprietor: Array Science, LLC, Sausalito, CA 94965 (US)
(72) Inventor: FULTON, Regan Spencer, Sausalito 94965 (US); CRAWFORD, William Scott, Dublin 94568 (US); HOAC, Trinh Kiet, Santa Clara 95054 (US)
(74) Representative: Boult Wade Tennant LLP

(56) References cited:
- EP-A1- 2 237 013
- WO-A1-2008/153879
- WO-A2-2006/058078

## Description

### FIELD OF THE INVENTION

The present invention relates to microarray blocks and, more particularly, to high yield microarray blocks.

### BACKGROUND

Tissue microarrays (TMAs), cell microarrays or cell line microarrays (CMAs) represent an analytically powerful format in which biological specimens are placed in an organized pattern into a block which can be sectioned by routine histologic methods and instruments. The resulting sections, which bear thin samples of the specimens from the block, are typically mounted onto microscope slides for subsequent analysis by techniques such as hematoxylin and eosin staining for cell and tissue morphology, immunohistochemistry for protein analysis, and in situ hybridization or gene sequencing for genetic analysis. An important class of TMA and CMA application is as reference materials for the validation and scientific control of diagnostic tests or assays such as those listed above.

A current microarray block typically contains a body formed from a material and having one or more "cores" arranged in a predetermined pattern in a body. Current materials for forming the body include paraffin wax, an agarose gel, acrylic epoxy and a polyester plastic medium. The cores contain material to be analyzed, for example biological or chemical species. The cores may also contain a solid matrix material in which the material to be analyzed is contained.

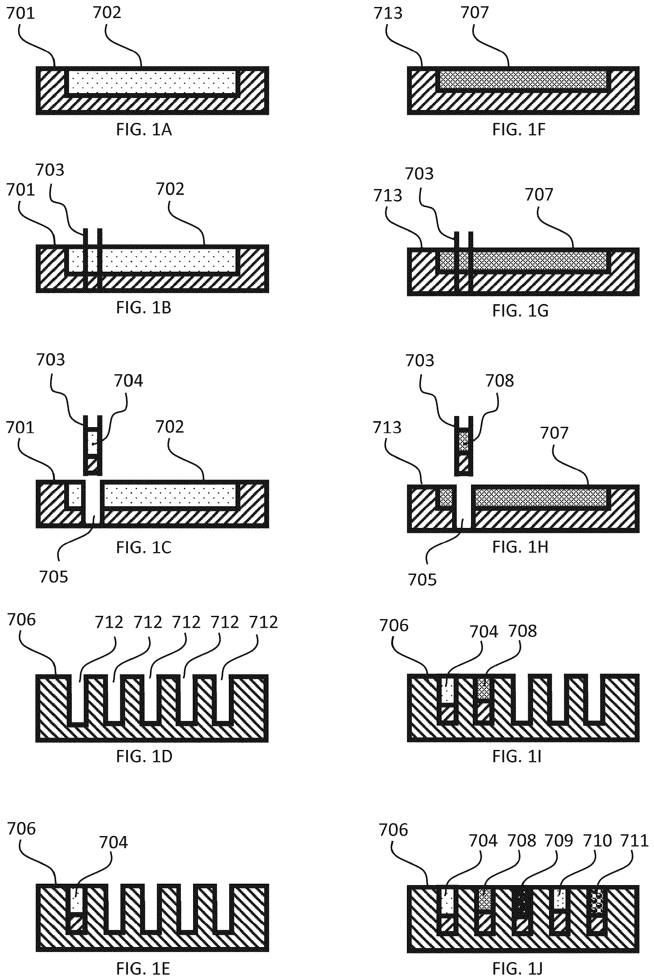

Prior art methods for the production of cell microarray blocks consist mainly of directly punching a donor block or processing cells in agarose pellets and placing them directly into a recipient block (see FIG. 1). See, for example, Kononen J, Bubendorf L, Kallioniemi A, Barlund M, Schraml P, Leighton S, Torhorst J, Mihatsch MJ, Sauter G, Kallioniemi OP. "Tissue microarrays for high-throughput molecular profiling of tumor specimens." Nature Medicine, July 1998, 4(7): 844-847 and US Patent No. 6,103,518. An instrument that embodies such technique is commonly used to produce such cell microarray blocks. See, for example, Montgomery K, Zhao S, van de Rijn M, and Natkunam Y. "A Novel Method for Making 'Tissue' Microarrays from Small Numbers of Suspension Cells." Appl Immunohistochem Mol Morphol, March 2005; 13(1): 80-84 and Waterworth A, Hanby A, Speirs V. "A novel cell array technique for high-throughput, cell-based analysis." In Vitro Cell Dev Biol Anim, 2005, 41: 185-187. Material to be analyzed that is located in the interstitial spaces between punches is commonly wasted. Further, the overall yield of the block is often limited by the depth of the minimum-thickness sample that has been punched.

Prior art methods of the production of microarray blocks also include high-yield approaches. See, for example, U.S. Patent No. 8,911,682.

Current methods for the production of microarray blocks are not suitable for mass production of replicate sections with highly repeatable biological and physical characteristics, which would be advantageous in certain application such as the validation and scientific control of diagnostic tests or assays.

WO 2008/153879 A1 discloses a method and apparatus for forming tissue microarray blocks. WO 2008/153879 A1 shows a sample of solid donor tissue shown as being stored or embedded in a body of solid wax, usually formalin fixed. The donor tissue is typically irregular in shape, typically having a region of minimum thickness and a region of maximum thickness. A plurality of coring tubes are forced downwardly through the donor tissue sample in order to transfer portions of the donor sample into the coring tubes or punches. The coring tubes are then removed from the sample donor tissue. Each core tissue sample contains a different thickness of donor tissue. For example, a core tissue sample contains a donor tissue sample having a thickness. A recipient block is typically formed of wax, having wells with a depth. The next step is to transfer the cylindrical tissue core samples into the wells of recipient block, usually made of paraffin wax. The upper surface of the block is sliced to obtain "daughter slices" of each of the core tissue samples. The core sample that has the smallest thickness, of each of the samples, will determine or limit the number of tissue samples that may be obtained from all of the wells of the recipient block.

EP 2 237 013 A1 discloses a cassette for capturing in a disk of hardened wax a sample of cell fragments from reagents flowing along a cell flow pathway.

WO 2006/058078 A2 discloses a system for preparing a cytoblock which includes an instrument and a series of associated supplies.

### DESCRIPTION OF THE DRAWINGS

FIG. 1A is a schematic, cross-sectional side view of one step of a prior art method of microarray construction wherein sample material is embedded in an embedding medium.
FIG. 1B is a schematic, cross-sectional side view of another step of a prior art method of microarray construction wherein a coring needle is inserted into the combined materials of FIG. 1A.
FIG. 1C is a schematic, cross-sectional side view of another step of a prior art method of microarray construction wherein a coring needle, now containing a core, has been retracted from the materials of FIG. 1A leaving a hole in the materials of FIG. 1A.
FIG. 1D is a schematic, cross-sectional side view of another step of a prior art method of microarray construction wherein a recipient block with wells is shown.
FIG. 1E is a schematic, cross-sectional side view of another step of a prior art method of microarray construction wherein the core of FIG. 1C has been placed in one of the wells of the recipient well of FIG. 1D.
FIG. 1F is a schematic, cross-sectional side view of another step of a prior art method of microarray construction wherein a separate sample material is embedded in a medium.
FIG. 1G is a schematic, cross-sectional side view of another step of a prior art method of microarray construction wherein a coring needle has been inserted into the combined materials of FIG. 1F.
FIG. 1H is a schematic, cross-sectional side view of another step of a prior art method of microarray construction wherein a coring needle, now containing a core, has been retracted from the materials of FIG. 1F leaving a hole in the materials of FIG. 1F.
FIG. 1I is a schematic, cross-sectional side view of another step of a prior art method of microarray construction wherein the core of FIG. 1H has been placed in another one of the wells of the recipient well of FIG. 1D.
FIG. 1J is a schematic, cross-sectional side view of another step of a prior art method of microarray construction wherein the recipient block of FIG. 1D has been filled with further cores of sample material.
FIG. 2A is a perspective view, with internal hidden lines shown as dashed, of an apparatus suitable for the present invention for creating of high-yield cores for a microarray block, more specifically a perspective view of one example of a casting element and a container element suitable for the present invention.
FIG. 2B is a side view, with internal hidden lines shown as dashed, of the casting element and container element of FIG. 2A shown prior to insertion of the casting element into an end of the container element.
FIG. 2C is a side view, with internal hidden lines shown as dashed, of the casting element and container element of FIG. 2A shown after insertion of the casting element into the end of the container element, with no sealing element at the mating location of the casting element with the container element.
FIG. 3A is a perspective view, with internal hidden lines shown as dashed, of an apparatus suitable for the present invention for creating of high-yield cores for a microarray block, more specifically a perspective view of one example of a casting element and a container element suitable for the present invention, with one example of a sealing element at one end of the casting element.
FIG. 3B is a side view, with internal hidden lines shown as dashed, of the casting element and container element of FIG. 3A shown prior to insertion of the casting element into an end of the container element.
FIG. 3C is a side view, with internal hidden lines shown as dashed, of the casting element and container element of FIG. 3A shown after insertion of the casting element into the end of the container element, the sealing element positioned at the interface of the casting element and the container element.
FIGS. 4A is a side view, with internal hidden lines shown as dashed, of an apparatus suitable for the present invention for creating of high-yield cores for a microarray block, more specifically a side view of one example of a casting element and a container element suitable for the present invention shown prior to insertion of the casting element into an end of the container element.
FIG. 4B is a side view, with internal hidden lines shown as dashed, of the casting element and container element FIG. 4A shown after insertion of the casting element into the end of the container element, with no sealing element at the mating location of the casting element with the container element. One example of a plunger is attached to one example of a plunger rod, which passes through an aperture of the container element.
FIG. 5A is a side view, with internal hidden lines shown as dashed, of an apparatus suitable for the present invention for creating of high-yield cores for a microarray block, more specifically a side view of one example of a casting element and a container element suitable for the present invention shown prior to insertion of the casting element into an end of the container element.
FIG. 5B is a side view, with internal hidden lines shown as dashed, of the casting element and container element FIG. 5A shown after insertion of the casting element into the end of the container, with one example of a sealing element positioned at the interface of casting the element and the container element. One example of a plunger is attached to one example of a plunger rod, which passes through an aperture of the container element.
FIG. 6A a perspective, top view of one example of a long-aspect-ratio straightening element suitable for the present invention having a groove in the top surface thereof. A lid may optionally be attached to the top surface to contain a core placed in the groove, for example during the processes illustrated in FIGS. 7 or 8.
FIG. 6B a top view of the long-aspect-ratio straightening element of FIG. 6A.
FIG. 6C an end view of the long-aspect-ratio straightening element of FIG. 6A.
FIG. 7A is a schematic illustration of one step of one embodiment of a method of the present invention for creating high-yield cores for a microarray block wherein a liquid form of carrier material is dispensed from a pipette into a container to mix with sample material in the container.
FIG. 7B is a schematic illustration of another step of one embodiment of a method of the present invention for creating high-yield cores for a microarray block wherein the liquid form of carrier material is mixed with the sample material to form a mixture in the container.
FIG. 7C is a schematic illustration of another step of one embodiment of a method of the present invention for creating high-yield cores for a microarray block wherein a casting member is contracted relative to the container, for example the casting member is inserted into the container.
FIG. 7D is a schematic illustration of another step of one embodiment of a method of the present invention for creating high-yield cores for a microarray block wherein the casting member and the container are further relatively contracted.
FIG. 7E is a schematic illustration of another step of one embodiment of a method of the present invention for creating high-yield cores for a microarray block wherein casting member and the container are further relatively contracted, for example the casting member is further inserted into the container in order to propel or move the mixture from the container into a lumenal volume of the casting member to form a column of the mixture in the casting member.
FIG. 7F is a schematic illustration of another step of one embodiment of a method of the present invention for creating high-yield cores for a microarray block wherein the casting member containing the column of the mixture has been removed from the container. The carrier material contained in mixture may become solid or semi-solid during or between the steps of FIGS. 7E and 7F.
FIG. 7G is a schematic illustration of another step of one embodiment of a method of the present invention for creating high-yield cores for a microarray block wherein the column of mixture is being transferred from the casting member to a straightening element, for example the straightening element of FIGS. 6A-6C.
FIG. 7H is a schematic illustration of another step of one embodiment of a method of the present invention for creating high-yield cores for a microarray block wherein the column of mixture is made compatible with a subsequent embedding and/or sectioning process, for example while disposed in the straightening element.
FIG. 7I is a schematic illustration of another step of one embodiment of a method of the present invention for creating high-yield cores for a microarray block wherein a segment of a solidified core is inserted into a well of a recipient block.
FIG. 7J is a schematic illustration of another step of one embodiment of a method of the present invention for creating high-yield cores for a microarray block wherein a microarray block has been completed by filling all of the desired wells of the recipient block with solidified cores of the mixture.
FIG. 8A is a schematic illustration of one step of one embodiment of a method of the present invention for creating high-yield cores for a microarray block wherein a liquid form of carrier material is dispensed from a pipette into a container to mix with sample material in the container.
FIG. 8B is a schematic illustration of one step of one embodiment of a method of the present invention for creating high-yield cores for a microarray block wherein the liquid form of carrier material is mixed with the sample material to form a mixture in the container.
FIG. 8C is a schematic illustration of one step of one embodiment of a method of the present invention for creating high-yield cores for a microarray block wherein a casting member is contracted relative to the container, for example the casting member is inserted into the container
FIG. 8D is a schematic illustration of one step of one embodiment of a method of the present invention for creating high-yield cores for a microarray block wherein a plunger is advanced with respect to the container to move the mixture in the container closer to the casting member.
FIG. 8E is a schematic illustration of one step of one embodiment of a method of the present invention for creating high-yield cores for a microarray block wherein the plunger is further advanced with respect to the container in order to propel or move the mixture from the container into the lumenal volume of the casting member to form a column of the mixture in the casting member.
FIG. 8F is a schematic illustration of another step of one embodiment of a method of the present invention for creating high-yield cores for a microarray block wherein the casting member containing the column of the mixture has been removed from the container. The carrier material contained in mixture may become solid or semi-solid during or between the steps of FIGS. 8E and 8F.
FIG. 8G is a schematic illustration of another step of one embodiment of a method of the present invention for creating high-yield cores for a microarray block wherein the column of mixture is being transferred from the casting member to a straightening element, for example the straightening element of FIGS. 6A-6C.
FIG. 8H is a schematic illustration of another step of one embodiment of a method of the present invention for creating high-yield cores for a microarray block wherein the column of mixture is made compatible with a subsequent embedding and/or sectioning process, for example while disposed in the straightening element.
FIG. 8I is a schematic illustration of another step of one embodiment of a method of the present invention for creating high-yield cores for a microarray block wherein a segment of a solidified core is inserted into a well of a recipient block.
FIG. 8J is a schematic illustration of another step of one embodiment of a method of the present invention for creating high-yield cores for a microarray block wherein a microarray block has been completed by filling all of the desired wells of the recipient block with solidified cores of the mixture.
FIG. 9A is a schematic illustration of one step of one embodiment of a method of the present invention, with internal hidden lines shown as dashed, for transferring a mixture from one example of a container element suitable for the present invention to the lumenal volume of one example of a casting element suitable for the present invention wherein an end of the casting element has been inserted into an end of the container element, with no sealing element at the interface between the casting element and the container element.
FIG. 9B is a schematic illustration of another step of one embodiment of a method of the present invention, with internal hidden lines shown as dashed, for transferring a mixture from one example of a container element suitable for the present invention to the lumenal volume of one example of a casting element suitable for the present invention wherein the casting element has been advanced to the point of contact with the mixture in the container element.
FIG. 9C is a schematic illustration of another step of one embodiment of a method of the present invention, with internal hidden lines shown as dashed, for transferring a mixture from one example of a container element suitable for the present invention to the lumenal volume of one example of a casting element suitable for the present invention wherein the casting element has been advanced to a position where the mixture in the container element has been partially transferred from a reservoir in the container element to a duct of the casting member.
FIG. 9D is a schematic illustration of another step of one embodiment of a method of the present invention, with internal hidden lines shown as dashed, for transferring a mixture from one example of a container element suitable for the present invention to the lumenal volume of one example of a casting element suitable for the present invention wherein the casting element has been advanced to a position where the mixture has been fully or nearly fully transferred from the reservoir in the container element to the duct of casting member.
FIG. 10A is a schematic illustration of one step of one embodiment of a method of the present invention, with internal hidden lines shown as dashed, for transferring a mixture from one example of a container element suitable for the present invention to the lumenal volume of one example of a casting element suitable for the present invention wherein an end of the casting element has been inserted into an end of the container element, with a sealing element at the interface between the casting element and the container element.
FIG. 10B is a schematic illustration of another step of one embodiment of a method of the present invention, with internal hidden lines shown as dashed, for transferring a mixture from one example of a container element suitable for the present invention to the lumenal volume of one example of a casting element suitable for the present invention wherein the casting element has been advanced to the point of contact with the mixture in the container element.
FIG. 10C is a schematic illustration of another step of one embodiment of a method of the present invention, with internal hidden lines shown as dashed, for transferring a mixture from one example of a container element suitable for the present invention to the lumenal volume of one example of a casting element suitable for the present invention wherein the casting element has been advanced to a position where the mixture in the container element has been partially transferred from a reservoir in the container element to a duct of the casting member.
FIG. 10D is a schematic illustration of another step of one embodiment of a method of the present invention, with internal hidden lines shown as dashed, for transferring a mixture from one example of a container element suitable for the present invention to the lumenal volume of one example of a casting element suitable for the present invention wherein the casting element has been advanced to a position where the mixture has been fully or nearly fully transferred from the reservoir in the container element to the duct of casting member.
FIG. 11A is a schematic illustration of one step of one embodiment of a method of the present invention, with internal hidden lines shown as dashed, for transferring a mixture from one example of a container element suitable for the present invention to the lumenal volume of one example of a casting element suitable for the present invention wherein an end of the casting element has been inserted into an end of the container element, with no sealing element at the interface between the casting element and the container element.
FIG. 11B is a schematic illustration of another step of one embodiment of a method of the present invention, with internal hidden lines shown as dashed, for transferring a mixture from one example of a container element suitable for the present invention to the lumenal volume of one example of a casting element suitable for the present invention wherein a plunger for the invention, for example carried by the container element, has been advanced so that the mixture in the container element is in contact with an end of the casting element.
FIG. 11C is a schematic illustration of another step of one embodiment of a method of the present invention, with internal hidden lines shown as dashed, for transferring a mixture from one example of a container element suitable for the present invention to the lumenal volume of one example of a casting element suitable for the present invention wherein the plunger has been advanced to a position where the mixture in the container element has been partially transferred from a reservoir in the container element to a duct of the casting member.
FIG. 11D is a schematic illustration of another step of one embodiment of a method of the present invention, with internal hidden lines shown as dashed, for transferring a mixture from one example of a container element suitable for the present invention to the lumenal volume of one example of a casting element suitable for the present invention wherein the plunger has been advanced to a position where the mixture has been fully or nearly fully transferred from the reservoir in the container element to the duct of the casting member.
FIG. 12A is a schematic illustration of one step of one embodiment of a method of the present invention, with internal hidden lines shown as dashed, for transferring a mixture from one example of a container element suitable for the present invention to the lumenal volume of one example of a casting element suitable for the present invention wherein an end of the casting element has been inserted into an end of the container element, with a sealing element at the interface between the casting element and the container element.
FIG. 12B is a schematic illustration of another step of one embodiment of a method of the present invention, with internal hidden lines shown as dashed, for transferring a mixture from one example of a container element suitable for the present invention to the lumenal volume of one example of a casting element suitable for the present invention wherein a plunger of the invention, for example carried by the container element, has been advanced so that the mixture in the container element is in contact with an end of the casting element.
FIG. 12C is a schematic illustration of another step of one embodiment of a method of the present invention, with internal hidden lines shown as dashed, for transferring a mixture from one example of a container element suitable for the present invention to the lumenal volume of one example of a casting element suitable for the present invention wherein the plunger has been advanced to a position where the mixture in the container element has been partially transferred from a reservoir in the container element to a duct of the casting member.
FIG. 12D is a schematic illustration of another step of one embodiment of a method of the present invention, with internal hidden lines shown as dashed, for transferring a mixture from one example of a container element suitable for the present invention to the lumenal volume of one example of a casting element suitable for the present invention wherein the plunger has been advanced to a position where the mixture has been fully or nearly fully transferred from the reservoir in the container element to the duct of the casting member.
FIG. 13 is a perspective view of one example of a microarray recipient block for the present invention, with wells formed therein, together with a histologic cassette.
FIG. 14 is a top view of the microarray recipient block and histologic cassette of FIG. 13.
FIG. 15 is a perspective view, from an opposite angle, of the microarray recipient block and histologic cassette of FIG. 13.
FIG. 16 is a front view, with hidden lines shown dashed, of the microarray recipient block and histologic cassette of FIG. 15.
FIG. 17 is a side view, with hidden lines shown dashed, of the microarray recipient block and histologic cassette of FIG. 15.
FIG. 18 is a cross-sectional view, taken along the line 18-18 of FIG. 16, of the microarray recipient and histologic cassette block of FIG. 15, showing the wells of the recipient block, the interlocked connection of the recipient block with the histologic cassette, and the optional through-holes of the recipient block.
FIG. 19 is an enlarged side cross-sectional view, similar to the side cross-sectional view of FIG. 18, of the microarray recipient block and histologic cassette of FIG. 15.
FIG. 20 is an exploded perspective view of one example of a casting-mold system for creating a recipient block and histologic cassette assembly, for example similar to the microarray recipient block and histologic cassette assembly of FIG. 13, and includes a mold, the histologic cassette and an optional mold insert.
FIG. 21 is a front view, with hidden lines shown dashed, of the casting-mold system of FIG. 20.
FIG. 22 is a side view, with hidden lines shown dashed, of the casting-mold system of FIG. 20.
FIG. 23 is a cross-sectional view, taken along the line 23-23 of FIG. 21, of the casting mold system of FIG. 20.
FIG. 24 is an assembled perspective view of the casting mold system of FIG. 20.
FIG. 25 is a top plan view of the assembled casting mold system of FIG. 24.
FIG. 26 is a cross-sectional view, taken along the line 26-26 of FIG. 27, of the assembled casting mold system of FIG. 24.
FIG. 27 is a side view, with hidden lines shown dashed, of the assembled casting mold system of FIG. 24.
FIG. 28 is a rear view, with hidden lines shown dashed, of the assembled casting mold system of FIG. 24.
FIG. 29 is a cross-sectional view, taken along the line 29-29 of FIG. 28, of the assembled casting mold system of FIG. 24.
FIG. 30 is a top plan view of another example of an assembled casting-mold system for creating a recipient block and histologic cassette assembly, for example similar to the microarray recipient block and histologic cassette assembly of FIG. 13.
FIG. 31 is a side view, with hidden lines shown dashed, of the assembled casting mold system of FIG. 30.
FIG. 32 is front view, with hidden lines shown dashed, of the assembled casting mold system of FIG. 30.
FIG. 33 is a cross-sectional view, taken along the line 33-33 of FIG. 31, of the assembled casting mold system of FIG. 30.
FIG. 34 is a schematic illustration of one step of one embodiment of a method of the present invention, with internal hidden lines shown as dashed, for creating a recipient block and histologic cassette assembly of the present invention, for example the recipient block and histologic cassette assembly of FIG. 13, by for example pouring a liquid into the casting mold system of FIG. 24 or FIG. 30.
FIG. 35 is a schematic illustration of another step of one embodiment of a method of the present invention, with internal hidden lines shown as dashed, for creating a recipient block and histologic cassette assembly of the present invention, for example the recipient block and histologic cassette assembly of FIG. 13, wherein a liquid has been poured into the casting mold system of FIG. 24 or FIG. 30.

### DETAILED DESCRIPTION

An apparatus and method can optionally be provided for forming cores containing a sample material, for example for use in forming a microarray block. The sample material can optionally be a biological material of any suitable type, for example a tissue sample, cell cultures, disaggregated tissue, disaggregated cells, pseudotissues, organoids, three dimensional tissue cultures, co-cultured cells, finely dispersed biological material, finely dispersed biological specimens or any combination thereof. The sample material can optionally be referred to as a biological sample. The biological material, and the biological sample, can optionally be referred to as a biological sample intended for section-based or histologic analysis, or histologic biological sample. The sample material can optionally be mixed with a carrier medium, which can also be referred to as a histologic carrier medium, two-phase medium, two-phase carrier medium or two-phase histologic carrier medium. The two phases are optionally a liquid or liquid-like phase and a solid or solid-like phase. The sample material is optionally mixed with the liquid or liquid-like phase of the carrier medium, which can optionally be referred to as a liquid carrier medium or liquid phase of the carrier medium. The liquid carrier medium serves to carry or convey the sample material, for example into a mold or other container. The sample material, for example dispersed or finely dispersed biological specimens or samples such as for example cells from culture, small pseudotissues or organoids or finely disaggregated tissue, can optionally be mixed with the liquid phase of the carrier medium, or liquid carrier medium, to form a fluidic suspension, which can also be referred to as a liquid-solid suspension or liquid-solid two-phase medium. The fluid behavior of this suspension can facilitate its flow into a mold or other container. The carrier medium can be of any suitable type, for example paraffin wax, the aqueous form of an agarose gel, an agarose-incorporating gel product such as the Histogel specimen processing gel of Fisher Scientific, a polymeric medium, a plastic compound, an acrylic, glycol methacrylate, an epoxy, a bisphenol-A-based epoxy, a cyclohexene dioxide-based epoxy, an ultraviolet light-curable plastic, a UV-curable polyester, a polyester plastic medium, EUKITT UV mounting media of ORSA-tec, a histology mounting media or any combination of the foregoing. The material of the carrier medium can optionally be referred to a matrix material. The sample material can optionally be preserved by immersion in a histologic fixative such as an alcohol-based solution or neutral buffered formalin solution, for example 10% neutral buffered formalin, before being mixed with the carrier medium.

Any suitable ratio of sample material to carrier medium can be utilized. Ratios of sample material to carrier medium ranging from 1:100 to 100:1 by volume can optionally6 be utilized and provided. Volumetric ratios of sample material to carrier medium ranging from 1:3 to 3:1 can optionally be utilized and provided. For example, where relatively few cells are required for a diagnosis, a corresponding low ratio of sample material to carrier medium can be utilized. For example, volumetric ratios in the range of approximating 1:100, for example in the case of disaggregated cells, may generate cell counts on the order of 100 in sections of a core diameter of two millimeters, which may be sufficient for some immunohistochemical diagnosis, for example. Very dense sample material may optionally be required. For example, a ratio of sample material to carrier medium of 100:1 could yield a nearly fully dense core of sample.

The biological sample and carrier medium can optionally be solidified to form a core of the biological sample and carrier medium, for example a cylindrical core. Solidification of the carrier medium optionally includes any process by which the properties of the carrier medium transition from liquid-like or liquid to becoming sufficiently solid-like or solid, for example for the core to hold its shape upon removal from the mold. Solidification optionally includes the process known as gelation. For example, for carrier mediums that are gels, such as for example agarose gels or an agarose-incorporating gel product such as the Histogel specimen processing gel of Fisher Scientific, solidification optionally includes gelation.

Cores of the biological sample and carrier medium can be of any suitable transverse dimension, for example diameter, and aspect ratio, that is ratio of the length of the core to the transverse dimension or diameter of the core. For example, cores can optionally be provided with transverse dimensions or diameters ranging from 0.5 millimeter to 5.0 millimeters, or any range therein. Cores can optionally be provided with transverse dimensions or diameters ranging from 0.1 millimeter to 25 millimeters, and or any range therein. Cores can optionally be provided with aspect ratios up to the order of 1000. Cores can optionally be provided with aspect ratios ranging from 100 to 1000, or any range therein.

A core of the biological sample and carrier medium, or carrier, can be formed in any suitable manner, for example with a suitable mold, which can optionally be referred to as a casting element. The mold can optionally be a tubular or cylindrical mold. The fluid nature of the carrier medium, for example liquid carrier medium or liquid phase of the carrier medium, can facilitate insertion or introduction of the biological sample and carrier into the mold. For example, the fluidic conditions or nature of the carrier medium can optionally induce flow into a mold, for example a lumen of the mold, so as to desirably influence the spatial distribution of specimen particles in the core. For example, in the case of a pressure-driven flow of a suspension or mixture with a hydrodynamically fully developed velocity profile in a mold, for example a tubular mold, parameters such as the Reynolds number, Knudsen number for particle-fluid interaction, electrostatic force and Magnus force can influence the spatial distribution of suspended particles in the mold. Control over some of these parameters can optionally be exerted, for example by controlling the velocity at which the suspension or mixture flows into the mold, for example a lumen of the mold, prior to solidification. Other means of applying forces to a flowing suspension or mixture, such as electrostatic forces or electromagnetic forces are optionally enabled by the method of the invention. The mixture or suspension in the mold can be solidified, for example as discussed above, to form a core of the biological sample and carrier.

At least a portion of the core can be inserted into one or more bores of a recipient block to form a microarray block for histologic sectioning. The recipient block can be of any suitable type and can be made from any suitable material, which can optionally be referred to as a matrix material. For example, the material of the recipient block can optionally include paraffin wax, an agarose gel, an agarose-incorporating gel product such as the Histogel specimen processing gel of Fisher Scientific, a polymeric medium, a plastic compound, an acrylic, glycol methacrylate, an epoxy, a bisphenol-A-based epoxy, a cyclohexene dioxide-based epoxy, an ultraviolet light-curable plastic, a UV-curable polyester, a polyester plastic medium, EUKITT UV mounting media of ORSA-tec, a histology mounting media or any combination of the foregoing. The liquid form of the material of the recipient block can optionally be equivalent to the liquid carrier medium or liquid form of the carrier medium, in which case the solidified material of the recipient block is equivalent to the solidified form of the liquid carrier medium. The material of the recipient block optionally remains solid or semi-solid when subjected to a temperature at which another substance, capable of bonding the cores to the recipient block, exists in the liquid state. The material of the recipient block may optionally be an agarose gel that has been dehydrated and paraffin infiltrated, and the material used for bonding the cores to the recipient block may optionally be paraffin, in which case the agarose gel remains solid at the temperature at which paraffin is liquid. The core has a length that is greater than the length of the one or more bores of the recipient block. For example, the core can have a length that is two, three, four or five times the length of a bore in the recipient block.

The core can optionally be made compatible with the material of the recipient block before insertion into the recipient block, and form a processed core of the biological sample and carrier medium. The term made compatible can optionally represent the establishment of properties of the core such that a bond is formed with sufficient strength to enable sections of the microarray block to be cut which have physical integrity, for example sections with cores that remain intact during histologic sectioning, mounting, staining and examination. Making the core compatible with the material of the recipient block can be performed in any suitable manner, for example with a conventional tissue processor from the histology industry. When the carrier medium includes or is an agarose gel and the material of the recipient block includes or is paraffin, making the core compatible can optionally include dehydrating the core followed by infiltrating the agarose gel of the core, or dehydrated core, with paraffin. The solidified and made compatible core, for example the processed core, has sufficient rigidity and strength to be capable of being free standing, for example without support, and can thus optionally be referred to as a free-standing core or stand-alone core.

As stated above, the microarray block can be sliced or sectioned to form microscopic slides or sections that include one or more sections or segments of a core of biological sample and carrier disposed in the block, for example in one or more bores of the block. For example, a microscope microarray slide or section of a microarray block having a plurality of cores disposed therein can include sections of each the plurality of cores. The method of the invention desirably provides high concentrations of the biological sample in core sections of the slide and uniformity of spatial distribution of the biological sample within the boundary of each core section on the microscope slide.

The apparatus can optionally include a container for holding the sample material and a liquid matrix material or carrier, and can optionally include a tubular casting member for cooperatively engaging the container and receiving the sample material and the carrier medium from the container and forming a core of the sample material and carrier medium. The core can optionally be a high-density core of the sample material and the carrier medium.

The embodiments of the invention set forth below are examples of the invention, and may in some instances be broader than the foregoing embodiment of the invention but are not intended to limit the breadth of the foregoing embodiment or the breadth of the invention. Additional features of the invention set forth in such embodiments are optional. A feature of any embodiment set forth below can be combined with the foregoing embodiment, with or without any other feature of any embodiment set forth below. All characteristics, steps, parameters and features of any method, process, apparatus, device or system described below are not limited to any specific embodiments set forth below, but instead are equally applicable to the foregoing embodiment of the invention and to all embodiments of the invention. Broad terms and descriptors are replaced in some instances with more specific terms and descriptors, not to limit a disclosure to a specific term or descriptor but merely for ease of discussion and understanding.

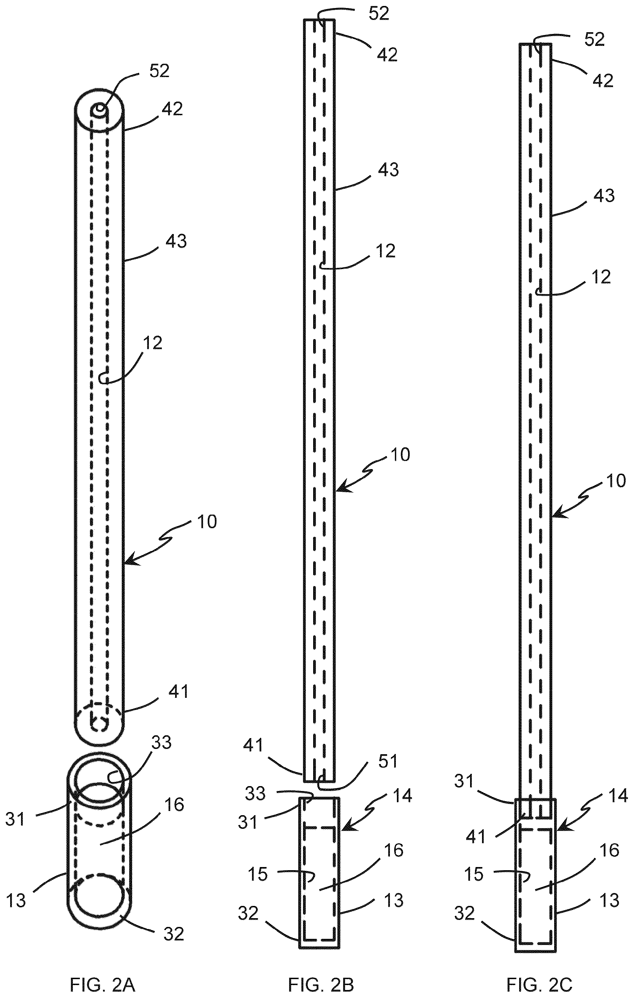

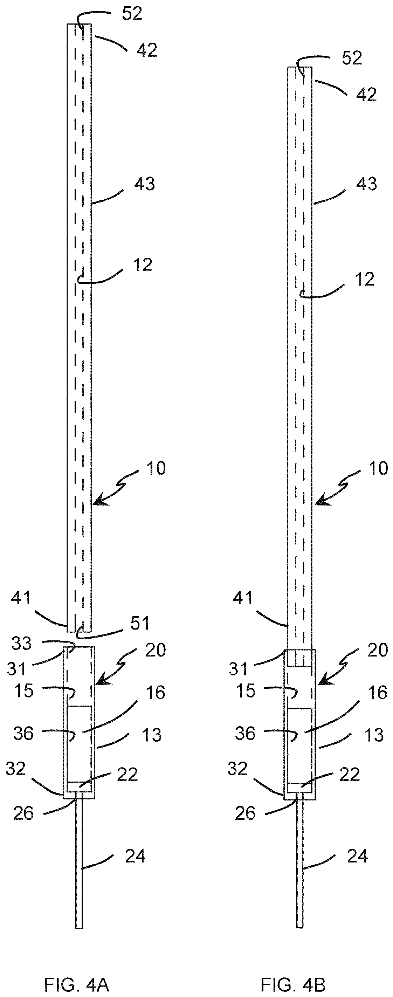

The apparatus or assembly for the invention can be of any suitable type, and in any example, for example as illustrated in FIGS. 2-5, the optional container, for example container 14 or 20, can be a container member or element 13. The container element can have a cylindrical exterior or an exterior surface of any other suitable shape. The container element can be a cylindrical element 13. The container element 13 can have a reservoir therein, for example reservoir 15, for holding the mixture of sample material, for example any of the biological samples disclosed herein, and the carrier medium, for example carrier or matrix material 16 that can be any of the carrier mediums disclosed herein. The container can be of any suitable solid material such as glass, plastic, metal, ceramic, or elastomer. The container element 13 can be tubular and be provided with opposite first and second ends 31, 32. In any example, for example container 14, the first end 31 of the tubular container can be open, that can be provided with an opening 33, and the opposite second end 32 of the container can be closed. The reservoir can be of any suitable size or shape and in any example can be a cylindrical bore 15 extending between the first and second ends of the tubular container. The opening 33 in the first end of the container can have a cross section that can be the same as the cross section of the cylindrical bore 15. In any example, the bore 15 can have a circular cross section. In any example, the container, for example container 14 or 20, can be capable of withstanding centrifugation.

In any example, for example container 20, the second end 32 of the container or cylindrical member or element, for example container element 13, can optionally have an opening or aperture 26 therein, for example a central aperture. In any example, the container can include a plunging element or plunger 22 for moving the sample material and carrier material towards the opening 33 in the first end 31 of the container element 13. The plunging element can have a cross section approximating the internal cross section of the reservoir or cylindrical bore 15 of the container, for example to minimize sample material or carrier material extending between the plunger 22 and the internal surface 36 of the container. An urging or propulsion means or an urging or propulsion mechanism can be coupled to or carried by the container for exerting a force on the plunger so as to advance the plunger towards the opening in the first end of the container. The urging means or mechanism can be of any suitable type, such as a source of pressurized fluid coupled to the aperture 26 in the second end 32 of the container or a rod or post 24 coupled to the plunger 22 and extending through the aperture 26.

The tubular casting member 10 of the apparatus or assembly for the invention can be referred to as a second container or mold for forming the high-density core, which can optionally be a high density cylindrical core, of the biological sample and carrier medium. The tubular casting member can be referred to or described as a tubular casting element, an elongate member, a cylindrical member, a tubular member or a tube, and can be provided with opposite first and second ends 41, 42. The tubular casting member can be of any suitable solid material such as glass, plastic, metal, ceramic, or elastomer. In any example, both the first end 41 and the second end 42 of the tubular casting member can be open. The tubular casting member can be of any suitable size or shape and in any example can be a cylinder having an external cross section approximating the internal cross section of the container element 13 of the container. For example, the tubular casting member can have an external circular cross section. In any example, the tubular casting member can have an external transverse dimension, such as an external diameter, that can be slightly less than the internal transverse dimension, such as internal diameter, of the container. In any example, the first end 41 of the tubular casting member can slidably extend through the opening 33 in the first end 31 of the container element 13 of the container and through the cylindrical bore 15 of the container. For example, the outside or external surface 43 of the tubular casting member can slidably and sealably engage the inside or internal surface 36 of the bore 15 of the container. In this manner, the tubular casting member 10 and the container can move longitudinally relative to each other from an extended configuration to a contracted configuration. Certain extended configurations of the assembly or apparatus for the invention are illustrated in the first side views of FIGS. 2-5 and certain contracted configurations of the assembly or apparatus for the invention are illustrated in the second side views of FIGS. 2-5.

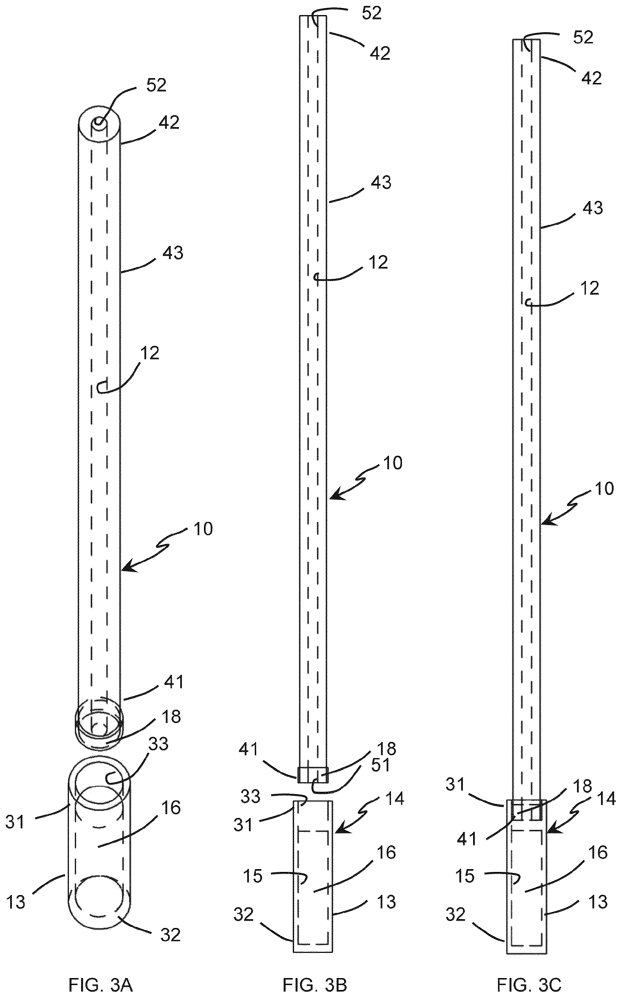

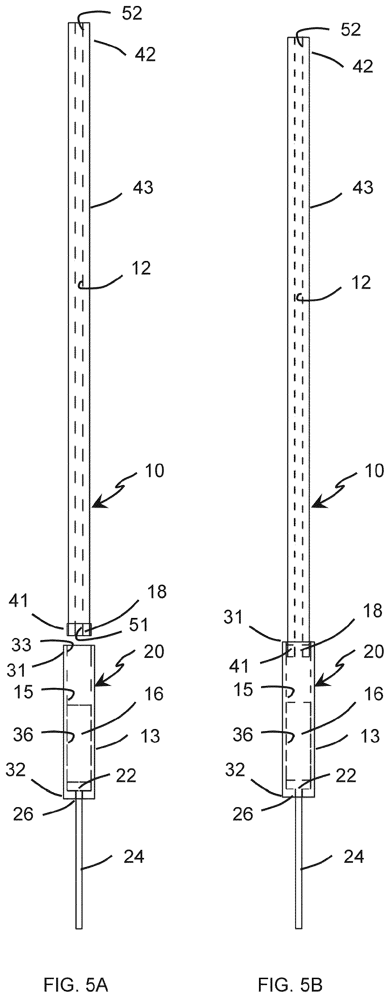

In any example, a suitable sealing element or seal, for example seal 18, can optionally be provided around the first end 41 of the tubular casting member 10, within the tubular bore 15 of the container element 13 of the container for example at the first end 31 of the container or both for enhancing a fluid-tight seal between the outside of the tubular casting member 10 and the inside of the bore of the container, including during slidable movement of the tubular casting member relative to the container (see FIGS. 3 and 5). The seal can be made from any suitable material, such as a silicone or other elastomeric material.

In any example, the seal between casting element 10 and container element 13 optionally need not involve insertion. For example, such a seal may be achieved via contact between the faces at the tips of end 41 of casting element and end 31 of container element, respectively, with or without a sealing element such as a gasket at the interface.

The internal surface of the casting member 10 can optionally form a channel or duct 12 with a given size and shape. The cross-sectional size and shape of the internal surface may optionally be constant throughout the length of the casting member, for example a cylinder, and in any example can optionally be a circular cylinder. The cross-sectional shape can optionally be square or any other non-circular shape for creating microarray sections with non-circular core sections, which can be advantageous for the purpose of sample identification in a microarray slide after sectioning of the microarray block. The duct or bore 12 within the casting member can communicate with a first opening 51 at the first end 41 of the casting member and a second opening 52 at the second end 42 of the casting member.

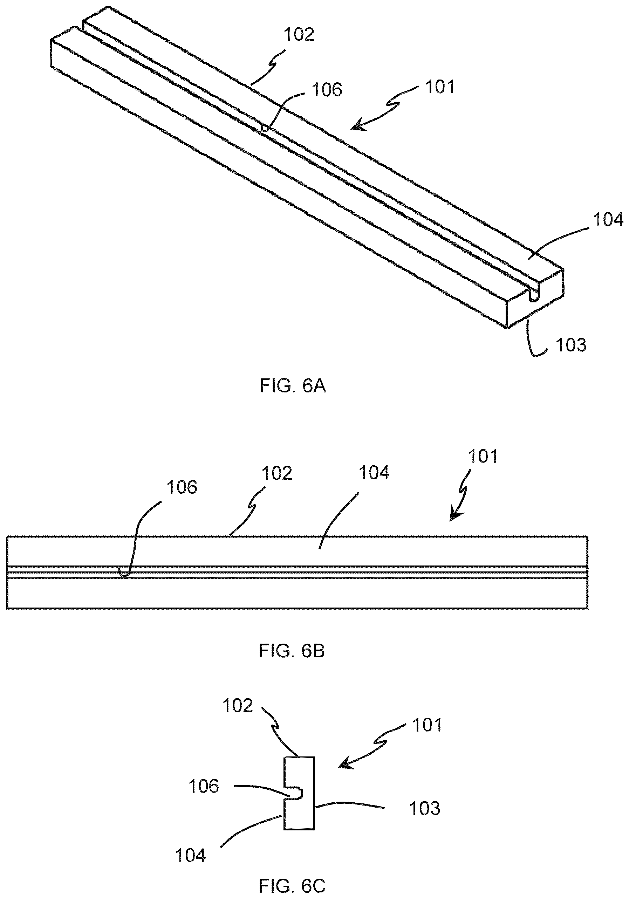

Another optional structure is a long-aspect-ratio cassette or other straightening element (see FIG. 6) that can optionally contain and support the core, for example after the core is removed from the casting member. The straightening element can be of any suitable type. In any example, a straightening element or device 101 can be provided formed from an elongate support structure 102 made from any suitable material such as a rigid or flexible plastic, ceramic, metal or elastomer. The straightening element can be referred to as a cassette. The structure 102 can have a bottom surface 103, that can be planar, and a top surface 104 provided with an elongate groove or channel 106 formed therein. In any example, the channel 106 can have a length at least equal to the core of the sample material and a transverse dimension at least equal to the width or transverse dimension of the core.

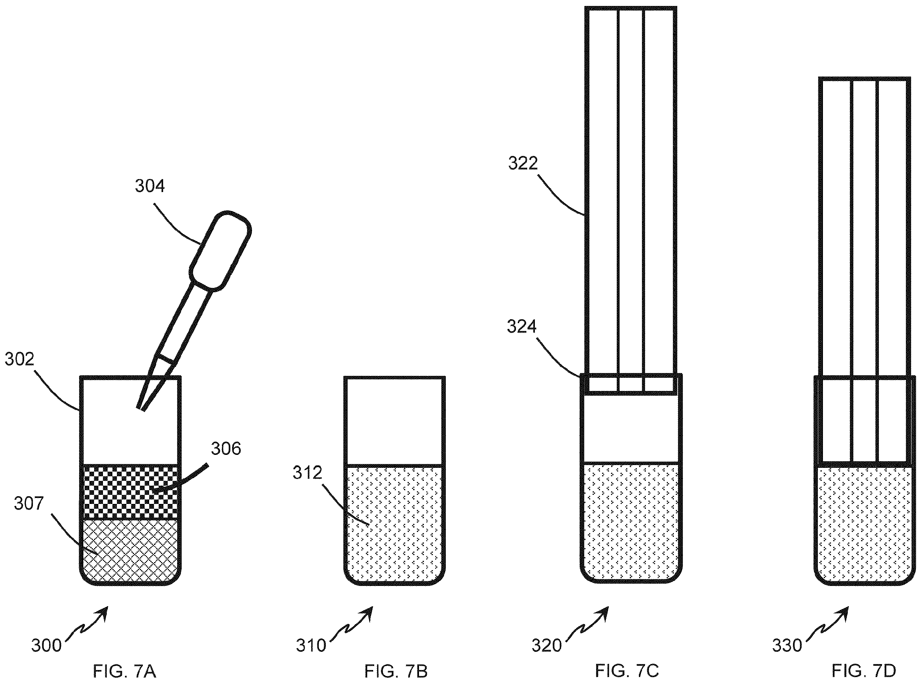

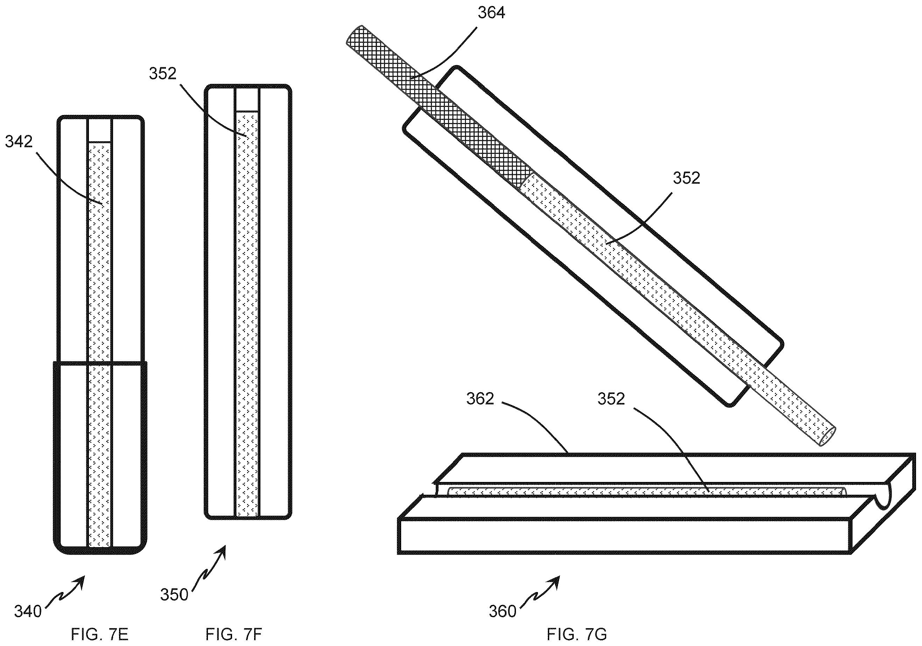

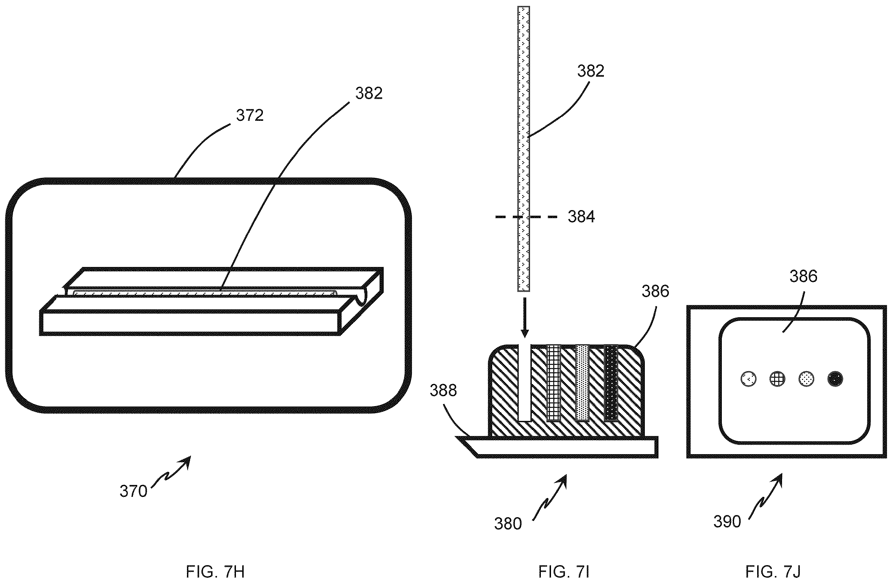

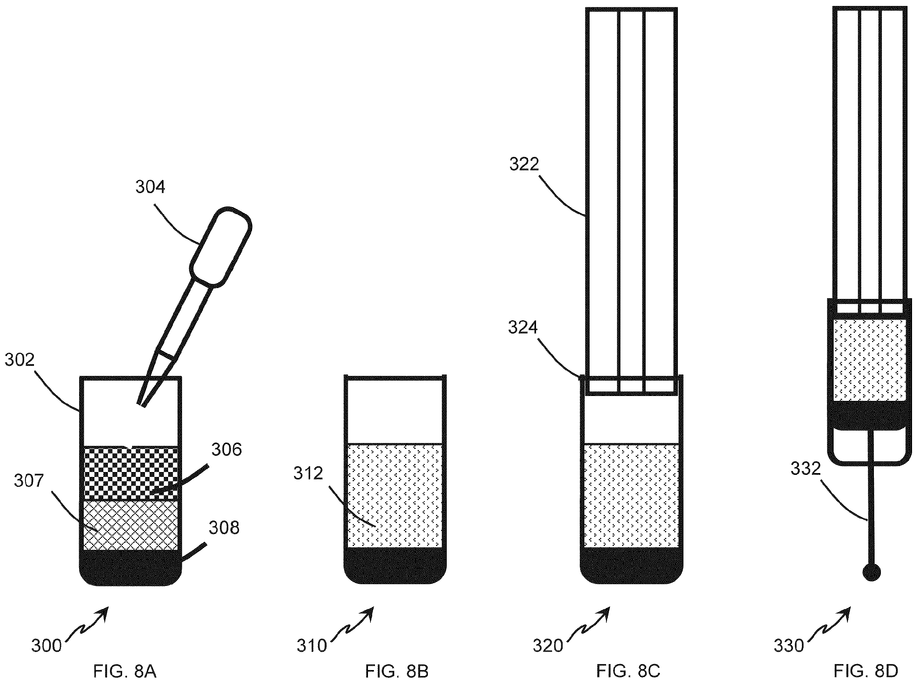

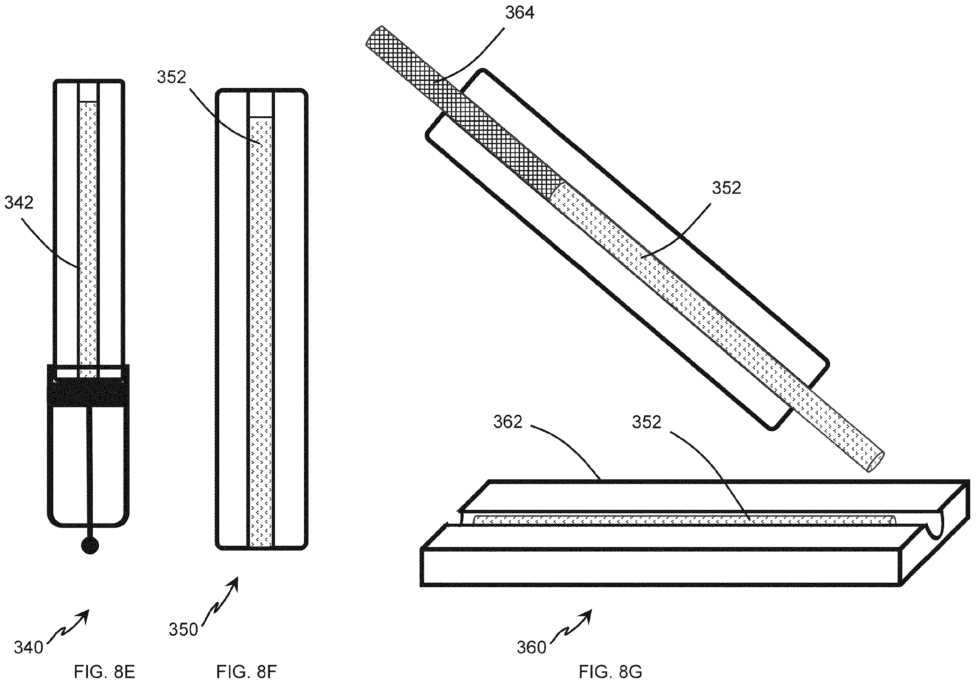

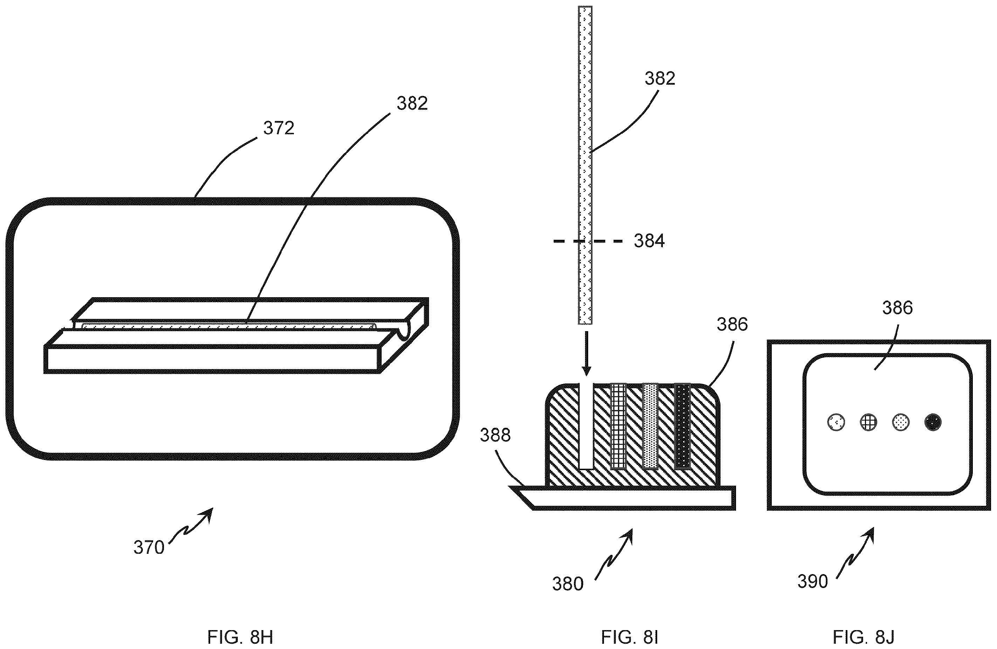

An optional method of forming a microarray block, for example a biological sample microarray block, is illustrated schematically in FIGS. 7-8. The method of FIG. 7 can utilize any suitable container and casting member, such as container 14 and casting member 10. The method of FIG. 8 can utilize any suitable container and casting member, such as container 20 and casting member 10. In step 300, pipette(s) or other suitable dispenser(s) 304 can be used to place a combination of sample material 306 and the liquid form of a suitable carrier material 307 into the container 302, for example containers 14 or 20. In any embodiment, the biological sample and liquid form of the carrier material or carrier medium may be mixed prior to placing it into the container. The biological sample can be of any type, for example any of the biological samples disclosed herein. In the method of FIG. 8, a plunging element 308 exists within the container, for example plunging element 22. Step 310 depicts the mixture 312 of sample material and liquid form of the carrier material in the container. In step 320, the casting member 322, for example casting member 10, is shown upon insertion into an open end of the container. In these diagrams, a sealing element 324, for example seal 18, can be provided to facilitate a fluid-tight seal between the casting element and the container. In any embodiment, a sufficient seal may be achieved without the use of such a sealing element. In step 330, one element can be advanced toward another in such a way as to bring the surface of the fluid mixture 312 into contact with the casting element 322. In the embodiment of FIG. 7, said contact can be achieved by advancing the casting element with respect to the container. In the embodiment of FIG. 8, said contact can be achieved by advancing the plunging element 308 with respect to the casting element. In step 340, the respective relative contraction of the container and casting member, for example the insertion of the casting member into the container, are continued to such an extent as to propel or transfer the mixture 312 into the lumen of the casting element, resulting in a column 342 of the mixture of sample material and carrier medium, which can be referred to as a cylinder, assuming the shape of the lumen, channel, duct or bore of the casting element. Subsequently, column 342 can be allowed to solidify, for example by means of cooling or other mechanism, causing solidification of the carrier material. Subsequent to solidification of column 342, the casting element may be removed from contact with the container as depicted in step 350. This step is optional, as the system may be designed to enable step 360 and/or 370 without said removal of contact between casting element and container. In step 360, the solid core can be removed from the casting element after solidification. As depicted, depending upon the mechanical properties of the solidified carrier material, the core may be highly flexible. In any embodiment, a specialized straightening element 362, for example straightening element 101 illustrated in FIG. 6, can receive the solidified core in step 360. The use of said straightening element is optional in the method.

In step 370, the solidified core can be made compatible with the embedding material, for example item or recipient block 386 in step 380, of the final microarray block. The recipient block can be made from any suitable material, including any of the materials discussed above. As used herein, the term made compatible can represent the establishment of properties in a material pair (core and embedding material) between which a bond is formed with sufficient strength to enable sections of the block to be cut which have physical integrity. In any embodiment where the embedding material of the block 386 can be paraffin and the core's carrier material can be agarose gel, step 370 may involve dehydration followed by paraffin infiltration of the agarose gel. The device represented by item 372 in step 370 may be a standard "tissue processing" instrument from the histology industry. The result of step 370 can be a core, which can be called a processed core and be for example core 382, that has been made compatible with the embedding material of block 386. The made compatible core, or processed core, of sample material and solidified carrier medium can optionally be called a free-standing or stand-along core and has sufficient strength and rigidity so to be capable of standing free of support.

Step 380 shows, in sectional side view, a segment from the core 382 being placed into an existing recipient block 386 mounted on a histologic cassette 388. The segment created by parting the core along the line 384, can be formed by any suitable means, for example using a scalpel or other blade. The segment can be formed either before or after its placement in the respective bore of the recipient block. Step 390 shows, in top view, a resulting microarray block. A suitable bonding step, for example a heating step, may be incorporated after step 380 in order to enhance the bond between the recipient block and the cores placed therein. In any embodiment, other steps such as polymerization of the embedding medium may be incorporated after step 380 in order to enhance the bond between the recipient block and the cores. A polymerization step may be desirable, for example, where the recipient block can be formed from a polymeric medium. Other methods may be used for embedding or disposing the cores within the embedding material, for example molding or otherwise forming a block around the cores. In any embodiment, for example, the cores may be held in a desired configuration within a mold and a liquid form of the embedding material can be introduced into the mold and allowed to solidify.

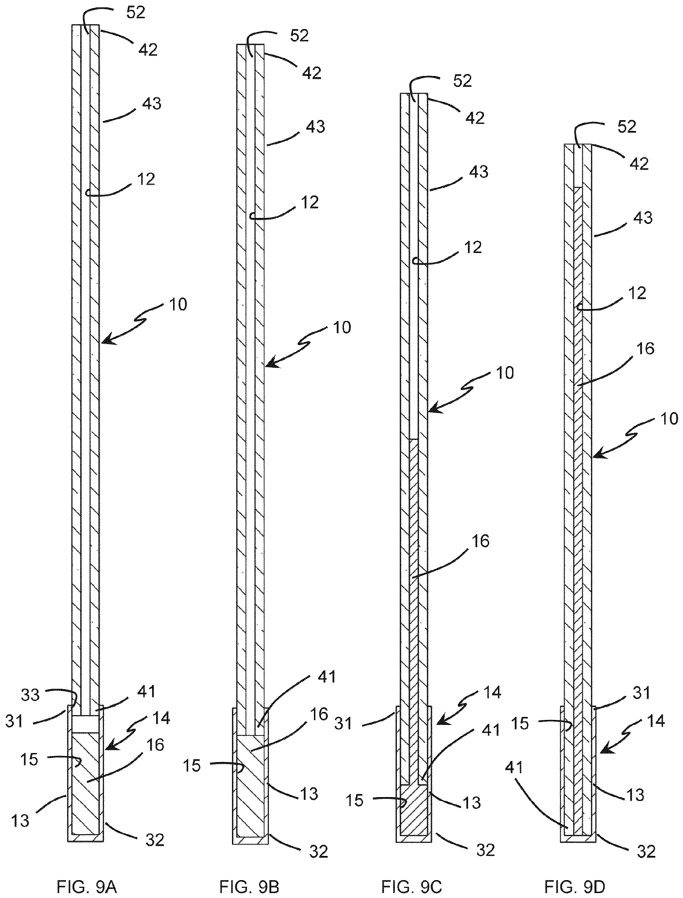

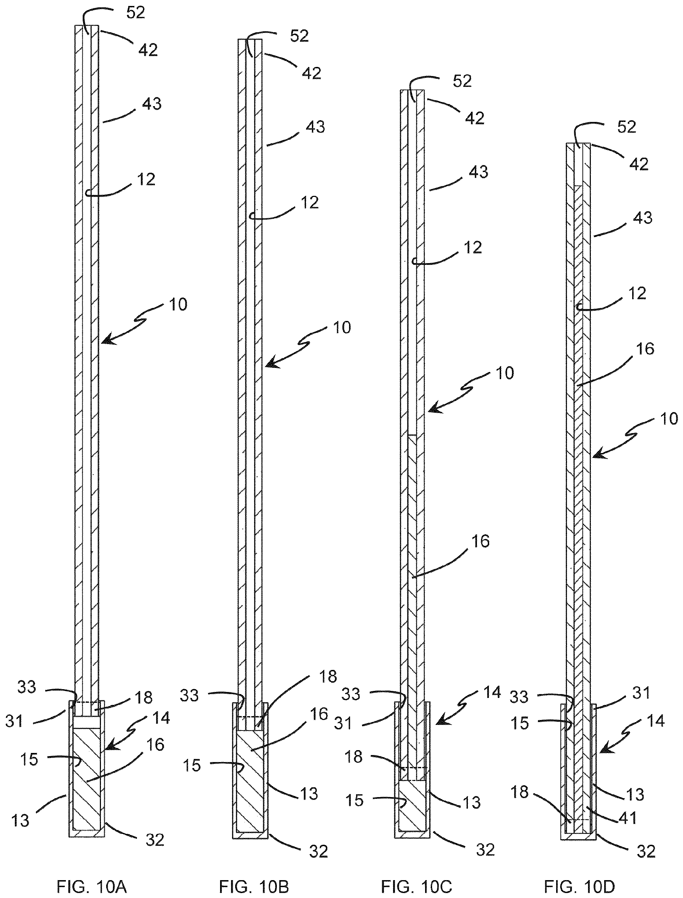

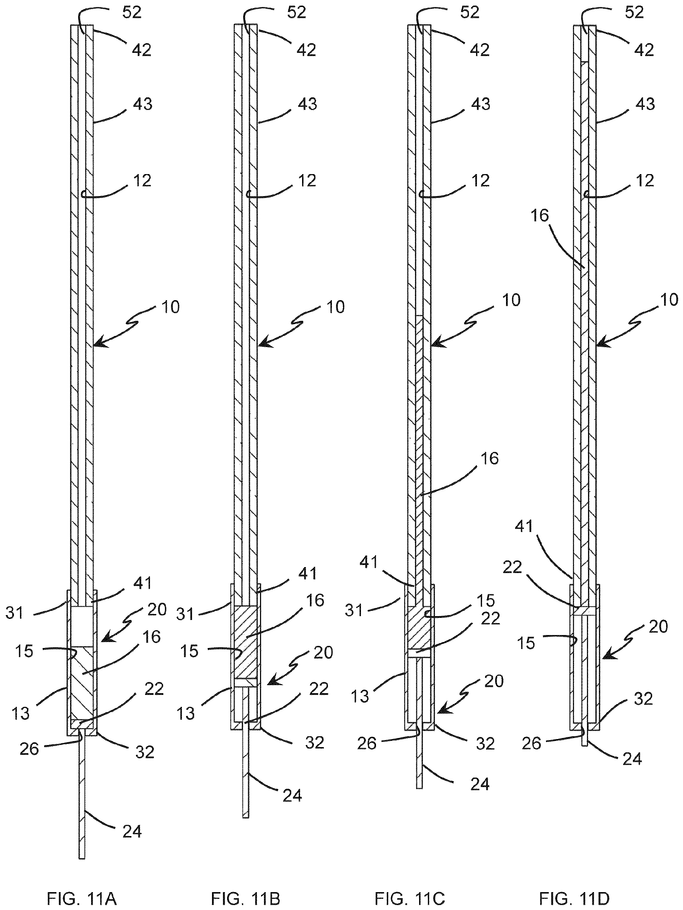

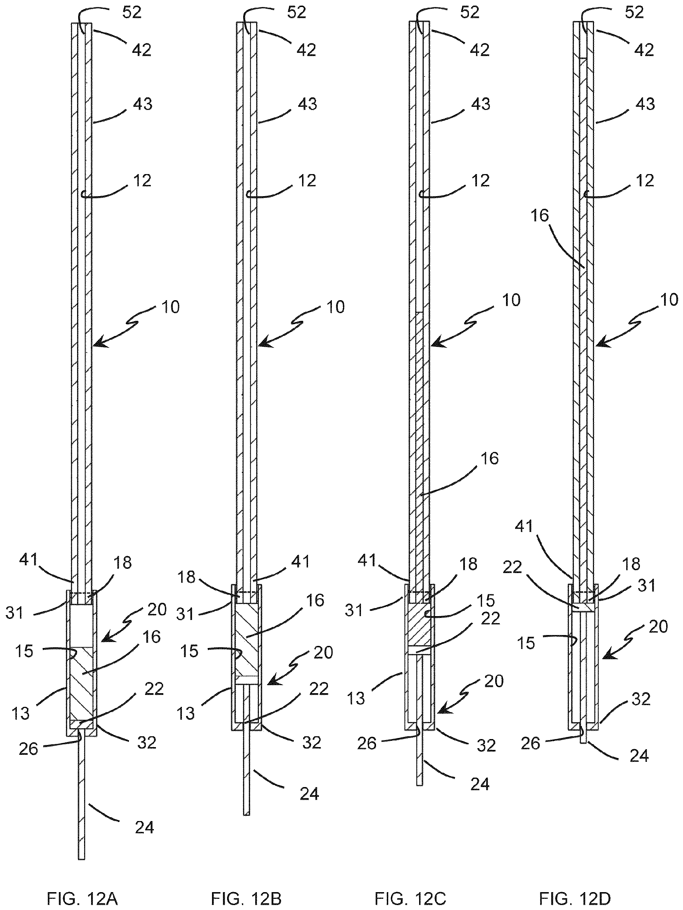

The progression of steps 320 through 340 in FIG. 7 are depicted in one method of the invention utilizing container 14 and casting member 10 in FIGS. 9 and 10, respectively for the embodiments without and with a sealing element between the casting element and the container. The progression of steps 320 through 340 in FIG. 8 are depicted in one method of the invention utilizing container 20 and casting member 10 in FIGS. 11 and 12, respectively for the embodiments without and with a sealing element between the casting element and the container. FIGS. 11 and 12 depict an embodiment in which the plunger element can be advanced by means of a rod, for example rod 24, passing through an aperture, for example aperture 26, provided at the second end 32 of the container element 13. It is appreciated that other means may be used to apply force to advance the plunger element, for example plunger 22. For example, pressurized gas or liquid may be introduced through the aperture 22 shown so as to urge the plunger from a first or home position located nearby end 32 to a second or actuated position away from end 32, for example closer to end 31. In any embodiment, a ferromagnetic material, or a magnetized material, may be coupled by direct or indirect contact with the plunger element 22. In this case, for example, an urging force may be applied to the plunger element via the application of a magnetic field, with or without the necessity of an aperture 26. In any embodiment, a magnetic element providing such urging force can be disposed outside of chamber or reservoir 15, that is outside of container element 13.

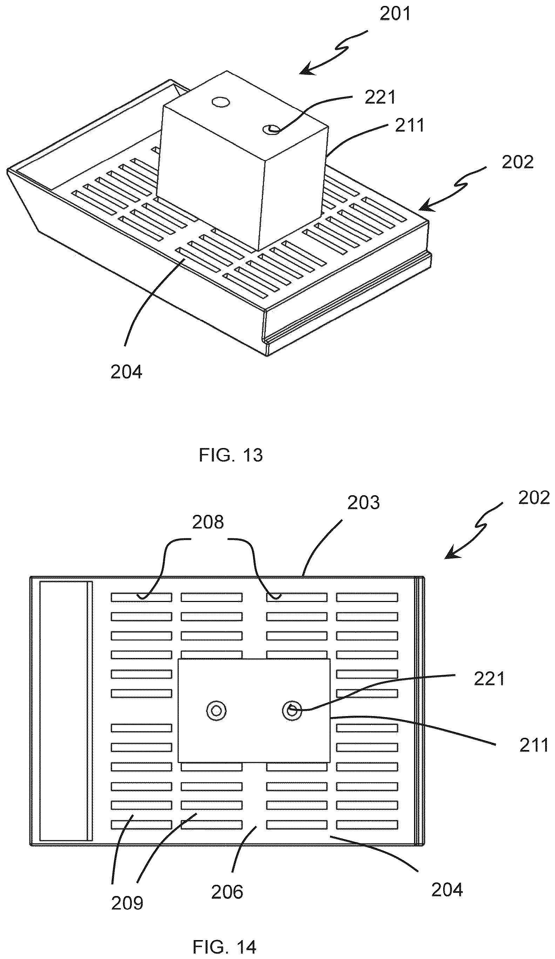

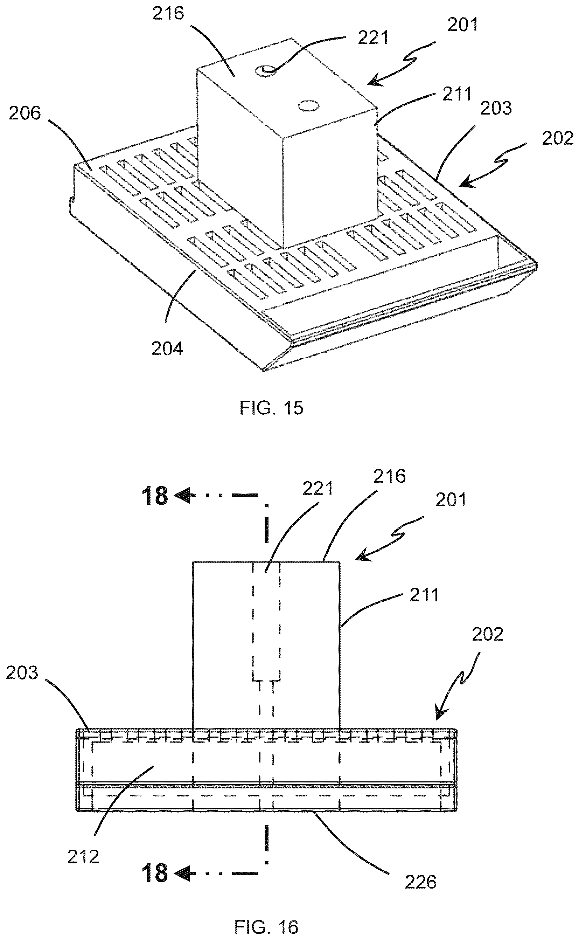

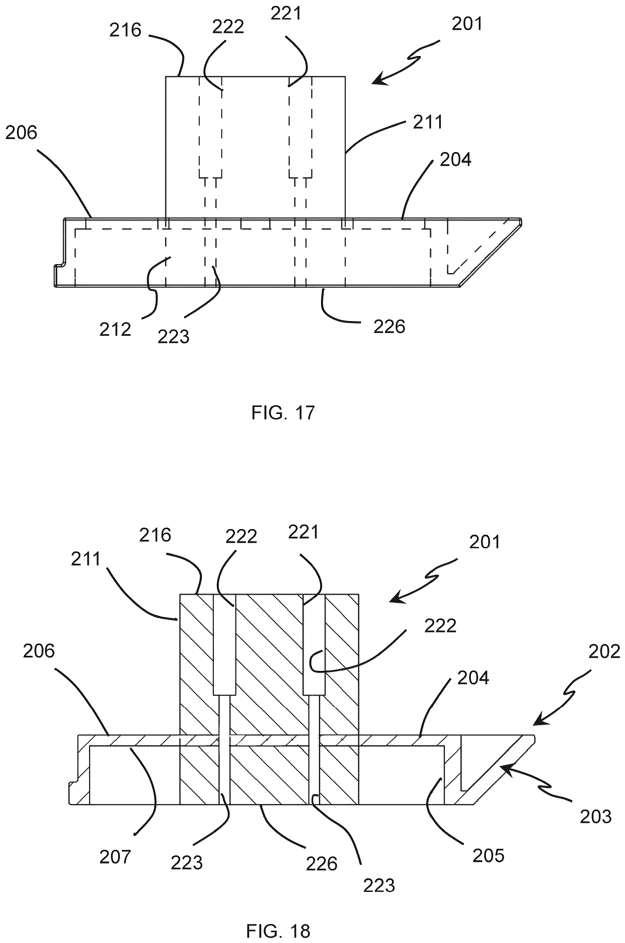

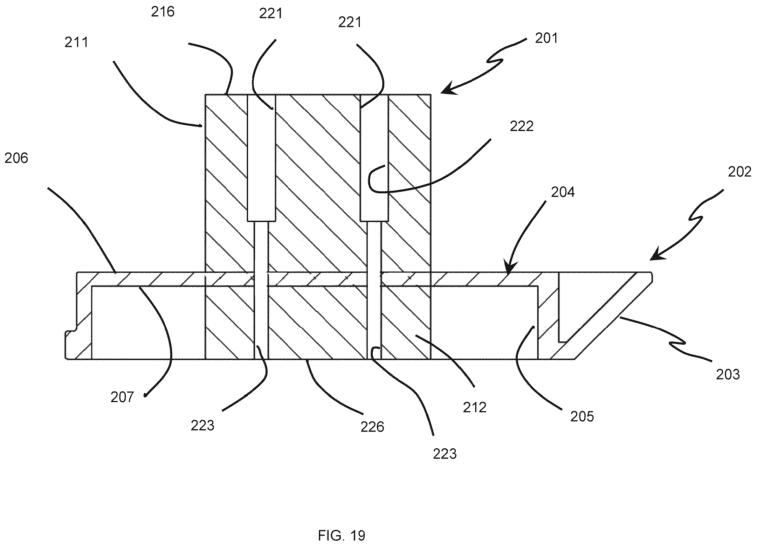

As discussed above, the recipient block can be of any suitable type. FIGS. 13-19 depict an optional recipient block for use in constructing a microarray block. The recipient block 201 can be bonded to a histologic cassette of any suitable type, for example cassette 388. Any example of a suitable histologic cassette 202 can be formed from a body 203 made from any suitable material, such as rigid plastic. Body 203 can include a planar support layer 204 having opposite first and second surfaces 206, 207, each of which can be planar. The body 203 can be provided with a cavity 205, having a base formed by second surface 207 of the planar support layer 204. The planar support layer can be provided with a plurality of openings 208 extending between the first and second surfaces 206, 207 for forming a plurality of support elements 209 in the planar support layer 204. In any example, each of the openings 208 can be a slot, and in any example each of the slots can extend parallel to each other. The recipient block 201 can be carried by the cassette 202 in any suitable manner, for example supported by planar support layer 204. In any example, the recipient block 201 can rest on first surface 206 of the cassette 202. The recipient block 201 can be secured to the cassette, for example planar support layer 204 of the cassette 202, in any suitable manner. In any example, a portion of the recipient block 201 can be embedded in at least a portion of the planar support layer 204 so as to be carried by and secured to the planar support layer 204 thereby.

Recipient block 201 can be formed from any suitable material, including any of the materials disclosed herein. As discussed above, the recipient block can optionally be formed from an agarose gel. In any example, for example where a portion of the recipient block can be embedded in the planar support layer 204, the recipient block 201 can have a first portion 211 extending from the first surface 206 of the planar support layer 204 and a second portion 212 extending from the second surface 207 of the planar support layer 204. In any example, the second portion 212 can be disposed in cavity 205 of the cassette body 203. The recipient block 201 can extend through at least some of the openings 208 in the planar support layer 204 so as to embed at least some of the support elements 209 of the support layer 204 between the first and second portions 211, 212 of the recipient block 201. The first portion 211 of the recipient block 201 can have a surface 216, for example a top or front surface, spaced from the first surface 206 of the planar support layer 204. In any example, the surface 216 of the first portion 211 can be planar and parallel to the planar support layer 204. The first portion 211 of the recipient block can be provided with at least one bore or well 221 extending into the first portion from the surface 216 that is adapted to receive the biological sample material, for example a core of the biological sample material and carrier medium. In any example, the first portion 211 can include a plurality of parallel bores or wells 221 extending from surface 216 into the first portion. The plurality of bores 221 can be parallel to each other, and spaced in an array on surface 216 with rows and columns of bores 221. One or more of the bores 221 in the recipient block 201 can extend through the first portion 211 and through one of the openings 208 in the planar support layer 204 and through the second portion 212. One or more of the bores 221 can have a first section 222 in the first portion 211 with a transverse dimension and a second section 223 in the second portion 211with a transverse dimension that can be smaller than the transverse dimension of the first section 222 of the bore 221. The first section 222 of the bore 221 can be referred to as a well and the second section 223 of the bore 221 can be referred to as a duct. The second portion 212 of the recipient block 201 can have a surface 226, for example a top or front surface, spaced from the second surface 207 of the planar support layer 204. In any example, the surface 226 of the second portion 212 can be planar and parallel to the planar support layer 204.

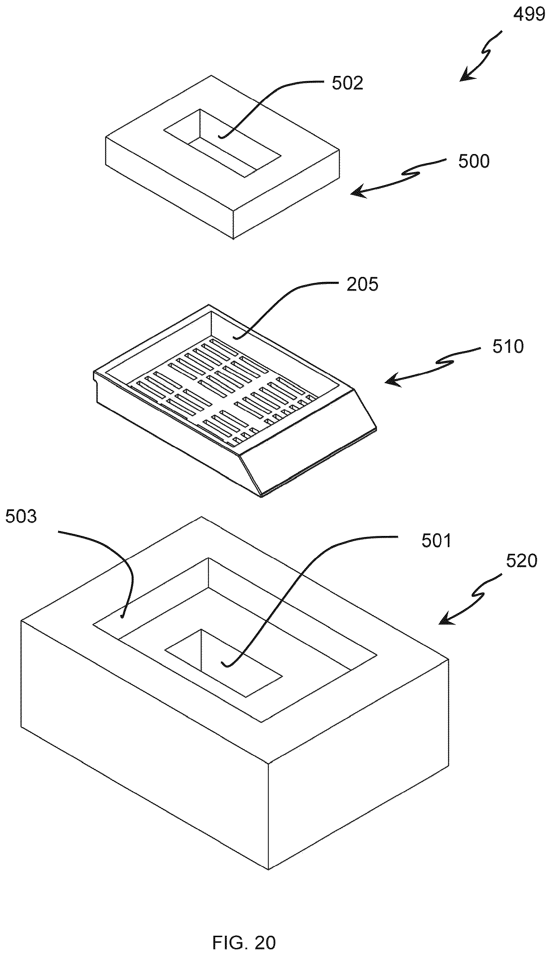

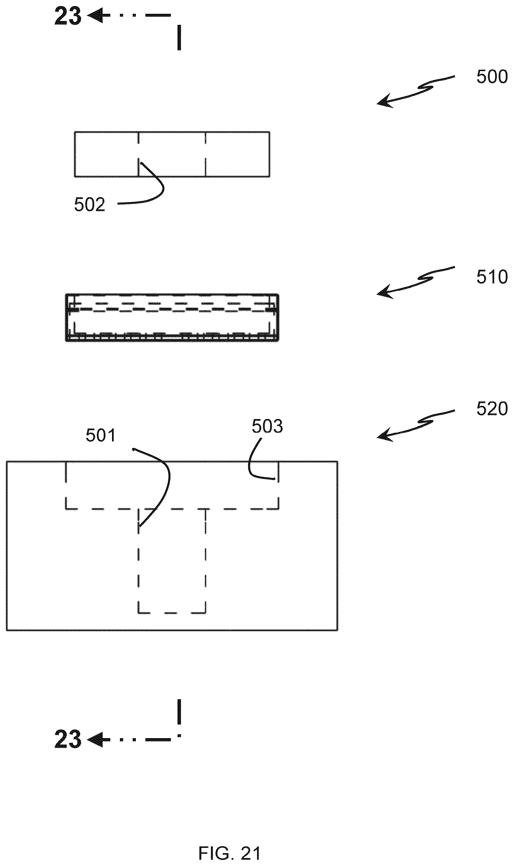

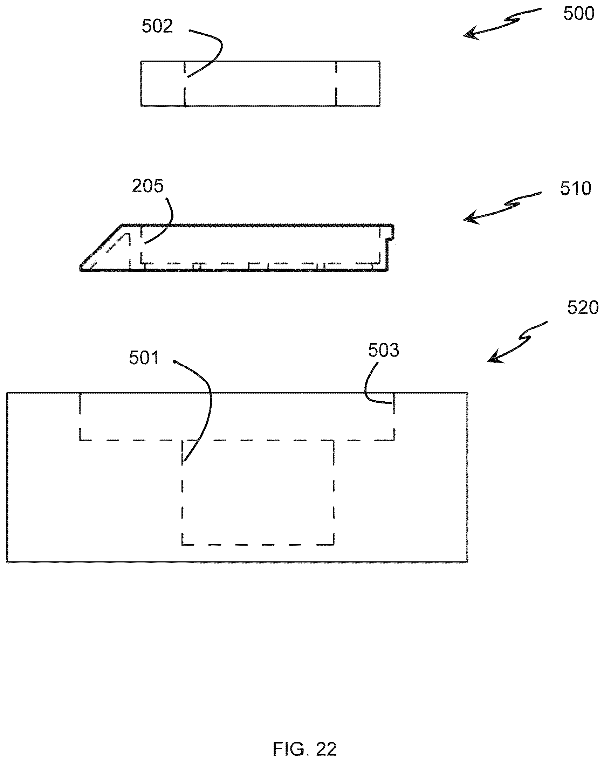

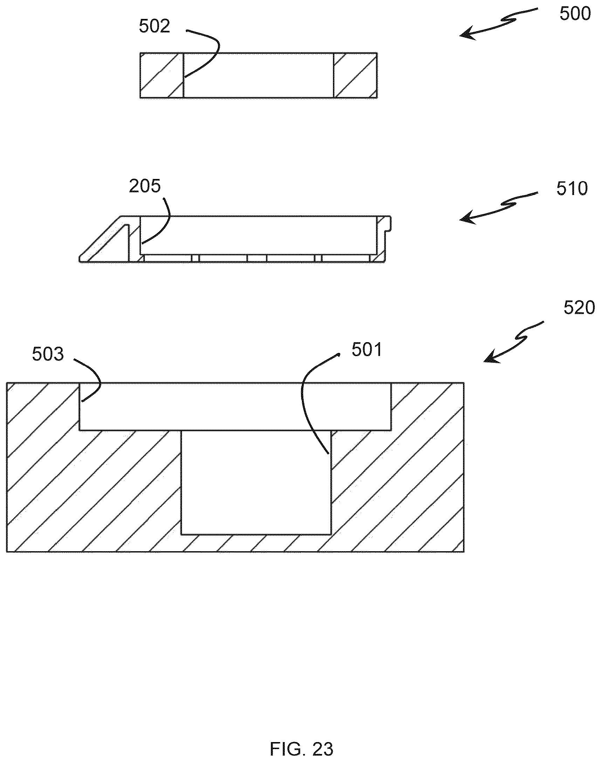

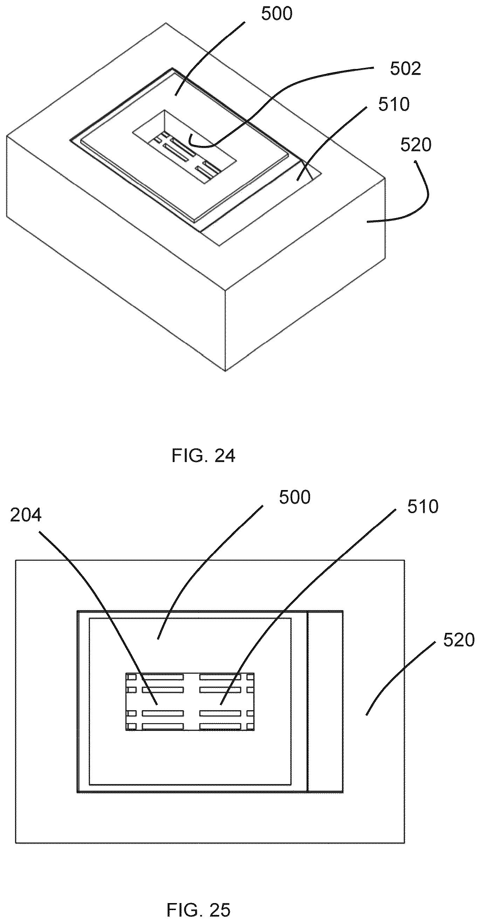

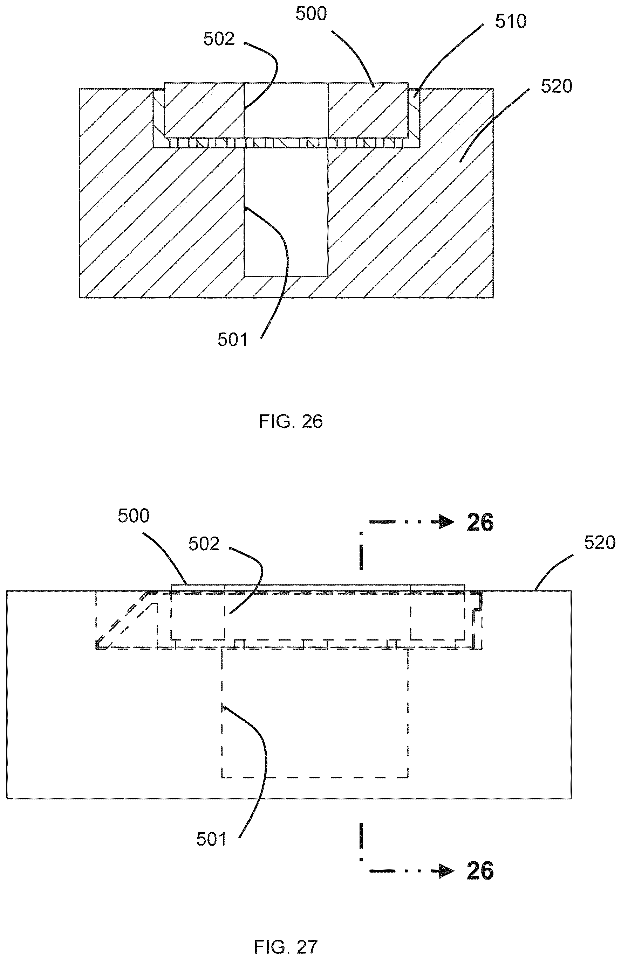

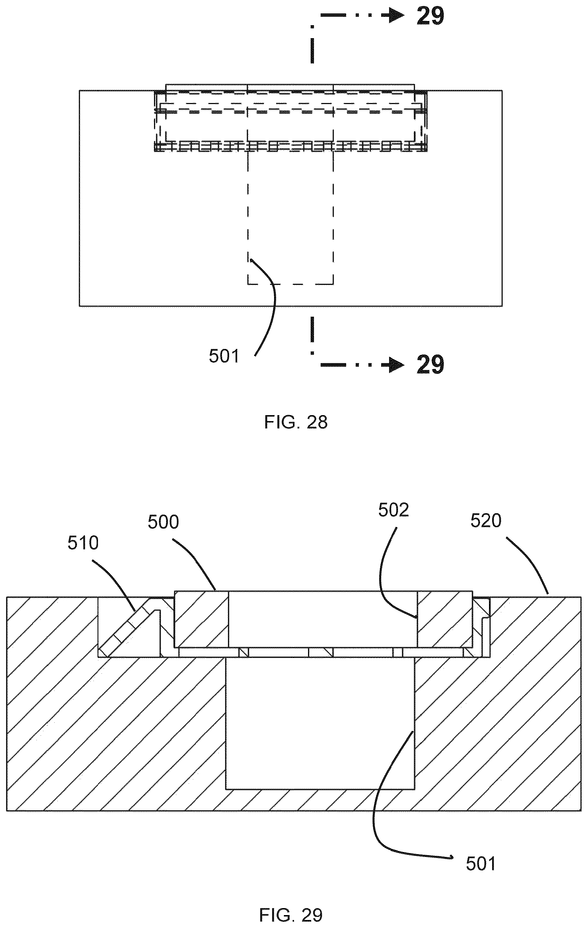

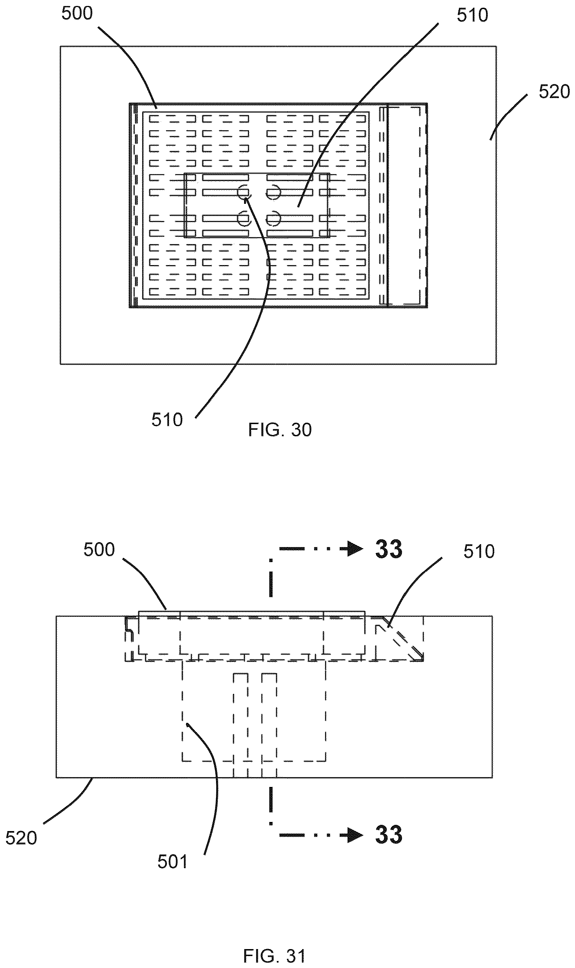

FIGS. 20-33 depict an optional casting system 499 for producing a suitable recipient microarray block, for example recipient block 201. Item 500 is an optional component and can be a frame to occupy part of the hollow cavity 205 at the back of histologic cassette 510, for example cassette 202. In any example, item 500 can include a mold 502 to form the second portion 212 of the recipient block 201. Item 520 can include a mold with an internal cavity 501 of the overall shape desired for the recipient block 201, for example the shape of the first portion 211 of the recipient block 201. In any example, item 520 can include a recess 503 for receiving cassette 510, which can include item 500 disposed in the cavity 205 of the cassette 510.

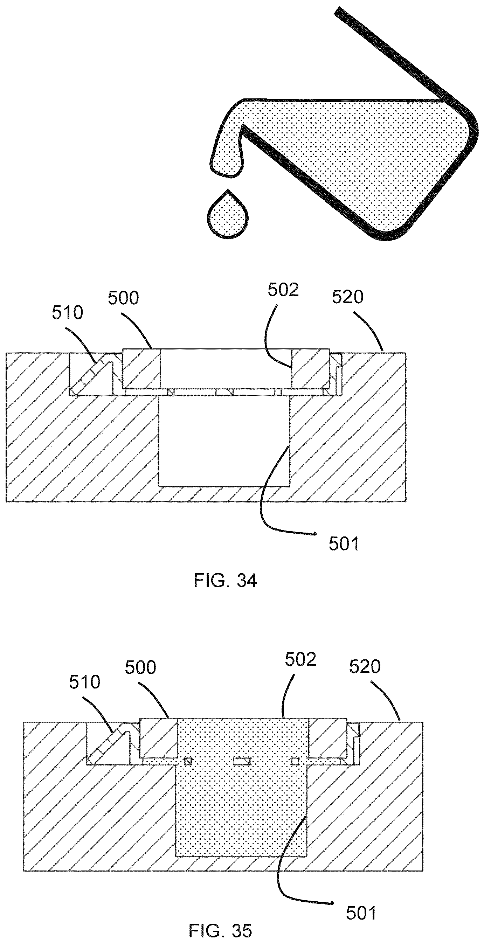

FIG. 34 illustrates the pouring of a liquid into such a casting system, for example casting system 499. As indicated in FIG. 35, the poured liquid can flow through the openings 208 in the histologic cassette 510 and fills the volume on both sides of the cassette not occupied by items 500 nor 520, for example cavity 501 in item 520 and cavity 502 in item 500. The liquid material subsequently solidifies in any suitable manner, for example due to cooling or another mechanism such as a polymerization reaction. The solid block material in FIG. 35, for example the solidified material, can then be removed from the casting system, resulting in a recipient block 201 such as shown in FIGS. 13-19 but possibly without bores yet formed in the block. The recipient block 201 can be attached to the cassette 510 by interlocking through the openings 208 in the cassette and around support elements 209 of the planar support layer 204 of the cassette.

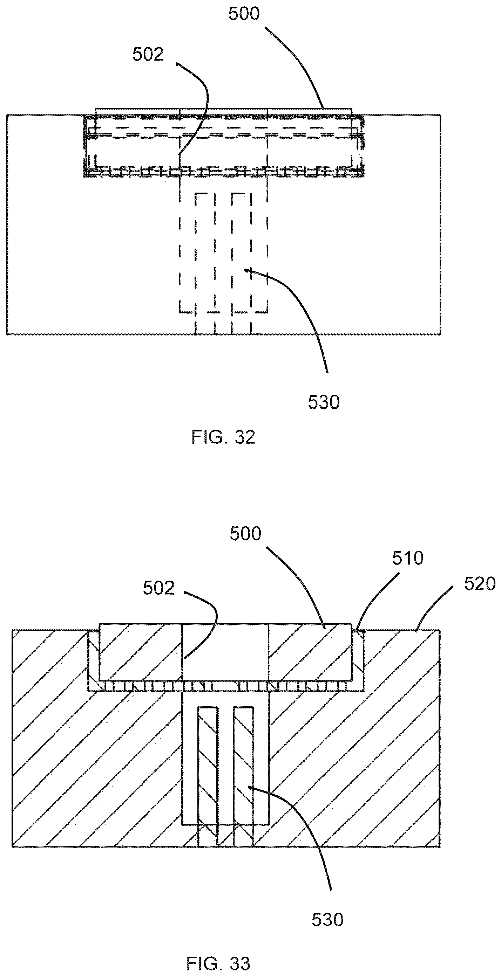

One or more bores 221 of the recipient block 201, for example shown in FIGS. 13-19, can be formed in any embodiment by a material removal process such as drilling, punching, coring, or milling of the recipient block 201. Alternatively, the one or more bores 221 can be formed in the casting process, for example by using pins 530 as shown in FIGS. 32-33. Pins 530 may have additional protrusions (not shown in FIGS. 32-33) of smaller dimension that extend through openings 208 in the cassette 510 in order to produce through-ducts in a portion of the recipient block 201, for example ducts 223 in the second portion 212 of the recipient block 201. Such ducts 223 can facilitate placement of the cores of biological material and medium within first section 222 of the one or more bores 221 of the recipient block 201.

The wells in the recipient block, for example wells 222, and correspondingly the cores of the microarray, may be of any suitable size. The wells and cores of a recipient block may optionally be cylindrical shapes having a diameter ranging from 0.5 to 5 millimeters and a length ranging from one to twenty millimeters.

As discussed above, the material of the recipient block can optionally be an agarose gel material. A suitable agarose gel for use in forming a recipient block can optionally be composed for example of 2% by volume agarose. During the casting process, for example the process depicted in FIGS. 34-35, the liquid material may be the aqueous form of this agarose gel material, in which the remaining volume can be largely composed of water. In this embodiment, after removal from the casting system 499 the block 201 with attached cassette 510 or 202 may be dehydrated and paraffin infiltrated, for the purpose of making it wettable by, and bondable with, paraffin-containing microarray cores.

In constructing a microarray block using recipient block 201, step 380 from FIGS. 7-8 can optionally be performed. In this step, cores 382 can be placed in the wells 222 of the recipient block 201. A further step may be performed to enhance the bonding of the cores to the recipient block. This step may comprise heating the combination of recipient block and cores to a temperature at which some fusing of these materials occurs, for example by softening or partial melting of paraffin contained within one or more of these materials. In any embodiment, the bonding step may include the addition of further liquid paraffin or other material. In any embodiment, the entire recipient block 201 may be embedded in such a material by casting the liquid form of the material into another mold of volume larger equal to or larger than the recipient block 201, then allowing the combination of all materials to become solid by cooling or another solidification mechanism such as a polymerization reaction.

Recipient block 201 can optionally be composed of a material which remains solid or semi-solid when subjected to a temperature at which another substance, capable of bonding the cores to the recipient block, exists in the liquid state. This property of such material of the recipient block 201 enables the liquid form of such other substance to be added to the assembly of recipient block and cores while the relative positions of the recipient block, cores, and histologic cassette are maintained. In any embodiment, the material of the recipient block 201 may be agarose gel that has been dehydrated and paraffin infiltrated, and the material used for bonding the cores to the recipient block may be paraffin. In such embodiment, the agarose gel remains solid at the temperature at which paraffin is liquid.

As used herein, a cylinder is intended to mean a surface traced by a straight line moving parallel to a fixed straight line and intersecting a fixed planar closed curve, a solid or surface bounded by a cylinder and two parallel planes cutting all its elements, or any combination of the foregoing.

A method for making a microarray block is provided. The method comprises providing a cylindrical core formed of a biological sample and a liquid carrier medium, the cylindrical core having a length and the biological sample being distributed along the length of the cylindrical core, disposing at least a portion of the cylindrical core in an internal bore in a recipient block to form the microarray block and dehydrating the cylindrical core and infiltrating the cylindrical core with paraffin before the disposing step so as to form a bond between the cylindrical core and recipient block.

The bond is sufficient to permit sections with physical integrity to be cut from the microarray block for analysis. That is, the bond may be suitable for sections cut from the microarray block to remain intact during histologic sectioning, mounting, staining and examination. The microarray block and/or sections cut from the microarray block may be free-standing or stand-alone - that is having sufficient rigidity and strength to be capable of being free standing, for example without support.

The bond between the cylindrical core and the recipient block is of sufficient strength to enable sections with physical integrity to be cut from the microarray block for analysis.

The biological sample may be selected from the group consisting of a tissue sample, cell cultures, disaggregated tissue, disaggregated cells, pseudotissues, organoids, three dimensional tissue cultures, co-cultured cells, finely dispersed biological material, finely dispersed biological specimens and any combination of the foregoing.

The liquid carrier medium may be selected from the group consisting of paraffin wax, the aqueous form of an agarose gel, an agarose-incorporating gel product such as the Histogel specimen processing gel of Fisher Scientific, a polymeric medium, a plastic compound, an acrylic, glycol methacrylate, an epoxy, a bisphenol-A-based epoxy, a cyclohexene dioxide-based epoxy, an ultraviolet light-curable plastic, a UV-curable polyester, a polyester plastic medium, EUKITT UV mounting media of ORSA-tec, a histology mounting media and any combination of the foregoing.

The recipient block may be formed from a material selected from the group consisting of paraffin wax, an agarose gel, an agarose-incorporating gel product such as the Histogel specimen processing gel of Fisher Scientific, a polymeric medium, a plastic compound, an acrylic, glycol methacrylate, an epoxy, a bisphenol-A-based epoxy, a cyclohexene dioxide-based epoxy, an ultraviolet light-curable plastic, a UV-curable polyester, a polyester plastic medium, EUKITT UV mounting media of ORSA-tec, a histology mounting media and a combination of the foregoing.

The cylindrical core has a length that is greater than a length of the internal bore.

The recipient block may have a plurality of internal bores and the disposing step may include disposing at least portion of the cylindrical core into the plurality of internal bores.

The method may further comprise slicing the microarray block into a plurality of sections each containing a plurality of sections of the cylindrical core.

The cylindrical core may have a length and a transverse dimension and a ratio of length to transverse dimension ranging from 100 to 1000. That may be expressed as 100:1 to 1000:1.

The internal bore of the recipient block may have a cross sectional shape, and the method may further comprise the steps of providing a mold having a cylindrical bore with a cross sectional shape equal to the cross sectional shape of the internal bore, the mold may have opposite first and second ends, the first end of the mold may have an opening of the cylindrical bore of the mold, introducing the biological sample and the liquid carrier medium through the opening, solidifying the liquid carrier medium in the mold to form the cylindrical core of the biological sample and the carrier medium, and removing the cylindrical core from the mold.

The method may further comprise the step of mixing the biological sample and the liquid carrier medium before the introducing step.

The method may further comprise the step of mixing the biological sample and the liquid carrier medium within the cylindrical bore of the mold.

The solidifying step may comprise heating the biological sample and the liquid carrier medium in the mold.

A method for making a microarray block is also provided. The method comprises providing a cylindrical core of a biological sample and a carrier medium, disposing at least a portion of the core in a recipient block formed from a material and making the core compatible with the material of the recipient block before the disposing step.

The disposing step may include forming a recipient block around at least a portion of the length of the cylindrical core.

The biological sample may be selected from the group consisting of a tissue sample, cell cultures, disaggregated tissue, disaggregated cells, pseudotissues, organoids, three dimensional tissue cultures, co-cultured cells, finely dispersed biological material, finely dispersed biological specimens and any combination of the foregoing.

The carrier medium may be selected from the group consisting of paraffin wax, the aqueous form of an agarose gel, an agarose-incorporating gel product such as the Histogel specimen processing gel of Fisher Scientific, a polymeric medium, a plastic compound, an acrylic, glycol methacrylate, an epoxy, a bisphenol-A-based epoxy, a cyclohexene dioxide-based epoxy, an ultraviolet light-curable plastic, a UV-curable polyester, a polyester plastic medium, EUKITT UV mounting media of ORSA-tec, a histology mounting media and any combination of the foregoing.

The internal bore of the recipient block may have a cross-sectional shape, the cylindrical core may have a cross-sectional shape that approximates the cross-sectional shape of the internal bore.

The method may further comprise the steps of providing a mold having a cylindrical bore, the mold may have opposite first and second ends, the first end of the mold may have an opening of the cylindrical bore, introducing the biological sample and the carrier medium through the opening in the mold, solidifying the biological sample and the carrier medium in the mold to form the cylindrical core of the biological sample and the carrier medium, and removing the cylindrical core from the mold.

In one aspect of the disclosure, not falling under the scope of the appended claims, a method for making a microarray block can be provided and can include providing a recipient block with at least one bore therein, the at least one bore having a cross sectional shape, providing a mold having a cylindrical bore with a cross sectional shape approximating the cross sectional shape of the at least one bore of the recipient block, the mold having opposite first and second ends, the first end of the mold having an opening that communicates with the cylindrical bore of the mold, introducing a biological sample and a liquid carrier medium through the opening, solidifying the biological sample and the liquid carrier medium in the mold to form a core, removing the core from the mold and inserting at least a portion of the core into the at least one bore of the recipient block.

The biological sample can be selected from the group consisting of a tissue sample, cell cultures, disaggregated tissue, disaggregated cells, pseudotissues, organoids, three dimensional tissue cultures, co-cultured cells, finely dispersed biological material, finely dispersed biological specimens or any combination thereof. The liquid carrier medium can be selected from the group consisting of paraffin wax, the aqueous form of an agarose gel, an agarose-incorporating gel product such as the Histogel specimen processing gel of Fisher Scientific, a polymeric medium, a plastic compound, an acrylic, glycol methacrylate, an epoxy, a bisphenol-A-based epoxy, a cyclohexene dioxide-based epoxy, an ultraviolet light-curable plastic, a UV-curable polyester, a polyester plastic medium, EUKITT UV mounting media of ORSA-tec, a histology mounting media and any combination of the foregoing. The method can optionally further include the step of mixing the biological sample and the liquid carrier medium within the cylindrical bore of the mold. The method can further include the step of mixing the biological sample and the liquid carrier medium before the introducing step. The solidifying step can include heating the biological sample and the liquid carrier medium in the mold. The at least one bore in the recipient block has a length and the core can have a length independent of the length of the at least one bore. The core has a length longer than the length of the at least one bore. The recipient block can be formed from a material, further comprising the step of making the core compatible with the material of the recipient block. The recipient block can be formed from paraffin and the making the core compatible step can include dehydrating the core and infiltrating the core with paraffin.

In one aspect of the disclosure, not falling under the scope of the appended claims, a method for making a microarray block can be provided and can include providing a mold having a cylindrical bore, the mold having opposite first and second ends, the first end of the mold having an opening that communicates with the cylindrical bore, introducing a biological sample and a liquid carrier medium through the opening in the mold, solidifying the biological sample and the liquid carrier medium in the mold to form a core, removing the core from the mold and disposing the core in a recipient block.

The disposing step can include forming a recipient block around at least a portion of the length of the core. The disposing step can include providing a recipient block with at least one bore therein and inserting at least a portion of the core into the at least one bore of the recipient block.

In one aspect of the disclosure, not falling under the scope of the appended claims, a method for making a microarray block can be provided and can include providing a recipient block formed of a material and having at least one bore therein, the at least one bore having a cross sectional shape, providing a core of a biological sample and a carrier medium having a cross sectional shape approximating the cross sectional shape of the at least one bore of the recipient block, making the core compatible with the material of the recipient block and inserting at least a portion of the core into the at least one bore of the recipient block.

The recipient block can be formed from paraffin and the making the core compatible step can include dehydrating the core and infiltrating the core with paraffin. The at least one bore in the recipient block has a length and the core can have a length independent of the length of the at least one bore. The core has a length longer than the length of the at least one bore.

In one aspect of the disclosure, not falling under the scope of the appended claims, a method for making a microarray block can be provided and can include providing a cylindrical core of a biological sample and a carrier medium, disposing the core in a recipient block formed from a material and making the core compatible with the material of the recipient block before the disposing step.

The disposing step can include forming a recipient block around at least a portion of the length of the cylindrical core. The disposing step can include providing a recipient block with at least one bore therein, the cylindrical core having a cross sectional shape approximating the cross-sectional shape of the at least one bore of the recipient block, and inserting at least a portion of the core into the at least one bore of the recipient block.

In one example, an assembly for forming a core of a biological sample for use in a recipient block having at least one bore with a cross sectional shape can be provided and can include a container having a reservoir adapted to receive the biological sample and a liquid carrier medium, the container being provided with an opening that communicates with the reservoir, a mold having an end and being provided with a cylindrical bore with a cross sectional shape approximating the cross sectional shape of the at least one bore of the recipient block and opening at the end of the mold, wherein the end of the mold can sealably engage the opening in the container for permitting the biological sample and the liquid carrier medium to be transferred from the reservoir to the cylindrical bore for forming the core.

The opening in the container can have a cross sectional shape and the mold can have an end provided with an outer surface having a cross sectional shape that approximates the cross-sectional shape of the opening in the container. The mold can be configured to slidably and sealably extend into the opening in the container so as to urge the biological sample and the liquid carrier medium from the reservoir into the cylindrical bore of the mold. The outer surface of the mold can have a length and the reservoir can have a depth at least equal to the length of the outer surface for permitting the end of the mold to slidably and sealably extend into the opening in the container for urging the biological sample and the liquid carrier medium from the reservoir into the cylindrical bore of the mold. The assembly can further include a seal provided at the least one of the outer surface of the mold and the opening in the container. The reservoir of the container can be a cylindrical bore having a cross sectional shape that approximates the cross-sectional shape of the opening in the container. The assembly can further include a plunger slidably disposed in the reservoir for urging the biological sample and the liquid carrier medium from the reservoir into the cylindrical bore of the mold. The assembly can further include a pressurized fluid source coupled to the container for moving the plunger from a first position to a second position for urging the biological sample and the liquid carrier medium from the reservoir into the cylindrical bore of the mold. The assembly can further include an actuation element coupled to the plunger for moving the plunger from a first position to a second position so as to urge the biological sample and the liquid carrier medium from the reservoir into the cylindrical bore of the mold.

In one example, an assembly for use with biological sample material to make a microarray block can be provided and can include a cassette having a planar support layer with opposite first and second surfaces, the planar support layer being provided with a plurality of openings extending between the first and second surfaces and forming a plurality of support elements in the planar support layer, a recipient block formed from an agarose gel, the recipient block having a first portion extending from the first surface of the planar support layer and a second portion extending from the second surface of the planar support layer, the recipient block extending through at least some of the plurality of openings in the planar support layer so as to embed at least some of the plurality of support elements between the first and second portions of the recipient block, the first portion of the recipient block having a surface spaced from the first surface of the planar support layer and being provided with at least one bore extending from the surface into the first portion that is adapted to receive the biological sample material.

The at least one bore can include a plurality of parallel bores extending into the first portion. The at least one bore can extend into the first portion extends through one of the plurality of openings in the planar support layer and through the second portion. The at least one bore can have a first section in the first portion with a transverse dimension and a second section in the second portion with a transverse dimension that is smaller than the transverse dimension of the first section. The surface of the first portion can be planar and parallel to the planar support layer and the second portion can have a surface that is planar and parallel to the planar support layer. The agarose gel of the recipient block can be dehydrated and infiltrated with paraffin.

In one aspect of the disclosure, not falling under the scope of the appended claims, a method for forming an assembly for use with biological sample material to make a microarray block can be provided and can include providing a cassette having a planar support layer with opposite first and second surfaces, the planar support layer being provided with a plurality of openings forming a plurality of support elements in the planar support layer and forming a recipient block from an agarose gel having a first portion extending from the first surface of the planar support layer and a second portion extending from the second surface of the planar support layer, the recipient block extending through at least some of the plurality of openings in the planar support layer so as to embed at least some of the plurality of support elements between the first and second portions of the recipient block.

The method can further include the step of forming at least one bore extending into the first portion that is adapted to receive the biological sample material. The forming step can include providing a first mold in front of the first surface of the planar support layer and providing a second mold in front of the second surface of the planar support layer and introducing agarose gel into the first and second molds to respectively form the first and second portions of the recipient block.

In one example, an assembly for use with biological sample material can be provided and can include a cassette having a support layer, a recipient block formed from an agarose gel, at least a portion of the support layer being embedded in the recipient block for securing the recipient block to the cassette, the recipient block having a surface spaced from the support layer and being provided with at least one bore extending from the surface into the recipient block adapted to receive the biological sample material.

The support layer can have opposite first and second surfaces, the planar support layer being provided with a plurality of openings extending between the first and second surfaces into which the at least a portion of the recipient block is disposed. The support layer can have opposite first and second surfaces, the recipient block having a first portion extending from the first surface of the planar support layer and a second portion extending from the second surface of the planar support layer. The at least one bore can extend through the first portion and the support layer and through the second portion. The at least one bore can have a first section in the first portion with a transverse dimension and a second section in the second portion with a transverse dimension that is smaller than the transverse dimension of the first section. The at least one bore can include a plurality of parallel bores extending from the first surface into the recipient block. The agarose gel of the recipient block can be dehydrated and infiltrated with paraffin. The assembly can further include the biological sample material being disposed in the at least one bore to provide a microarray block for sectioning. The biological sample material can be selected from the group consisting of a tissue sample, cell cultures, disaggregated tissue, disaggregated cells, pseudotissues, organoids, three dimensional tissue cultures, co-cultured cells, finely dispersed biological material, finely dispersed biological specimens and any combination of the foregoing. The assembly can further include a mixture of cell cultures and an agarose gel in the at least one bore to provide a microarray block for sectioning, the mixture being dehydrated and paraffin infiltrated.

In one example, an assembly for histologic sectioning can be provided and can include a cassette having a support layer with opposite first and second surfaces, the support layer being provided with a plurality of openings extending between the first and second surfaces, a recipient block formed from an agarose gel that has been dehydrated and infiltrated with paraffin, the recipient block having a first portion extending from the first surface of the support layer and a second portion extending from the second surface of the support layer, the recipient block extending through at least some of the plurality of openings in the support layer for securing the recipient block to the cassette, the first portion of the recipient block having a surface spaced from the first surface of the support layer and being provided with a plurality of bores extending from the surface into the first portion, biological sample material selected from the group consisting of a tissue sample and cell cultures disposed in each of the plurality of bores for providing a microarray block for histologic sectioning.

The biological sample material can be a mixture of cell cultures and an agarose gel that has been dehydrated and paraffin infiltrated. The plurality of openings in the support layer can form a plurality of support elements in the support layer that are embedded between the first and second portions of the recipient block. The plurality of bores can extend into the first portion of the recipient block extends through the plurality of openings in the support layer and through the second portion. Each of the plurality of bores can have a first section in the first portion with a transverse dimension and a second section in the second portion with a transverse dimension that is smaller than the transverse dimension of the first section. The microarray block can be embedded in paraffin to enhance bonding of the biological sample material to the recipient block. The plurality of bores extending into the first portion of the recipient block can extend through the plurality of openings in the support layer and through the second portion.

In one aspect of the disclosure, not falling under the scope of the appended claims, a method for forming an assembly for use with biological sample material can be provided and can include a cassette having a support layer with a plurality of openings, forming a recipient block from an agarose gel having at least a portion disposed in the plurality of openings in the support layer for securing the recipient block to the cassette and at least one bore extending into the recipient block from a surface spaced from the support layer for receiving the biological sample material.

The support layer can have opposite first and second surfaces and the forming step includes forming a first portion of the recipient block extending from the first surface and a second portion of the recipient block extending from the second surface. The forming step can include providing a first mold in front of the first surface of the support layer and providing a second mold in front of the second surface of the planar support layer and introducing an aqueous form of the agarose gel into the first and second molds to respectively form the first and second portions of the recipient block. The method can further include dehydrating and paraffin infiltrating the recipient block as secured to the cassette. The forming step can include forming a plurality of bores extending into the recipient block from the surface spaced from the support layer for receiving the biological sample material. The method can further include disposing the biological sample material into the plurality of bores to form a microarray block for histologic sectioning. The method can further include embedding the microarray block in liquid paraffin and allowing the paraffin to cool to enhance bonding of the biological sample material to the recipient block.

The method of the present invention can offer significant advantages over the prior art, which are highly relevant to the quality and quantity of final product achievable from a fixed amount of sample material, which in certain instances can be a precious resource. For example, the apparatus and methods of the invention can increase the utilization, and thereby reduce the waste, of sample material by reducing the fraction of sample material that is not formed into the desired shape for the cores utilized in a microarray block. Cores of biological sample and carrier medium can be provided with extremely large aspect ratio, that is ratio of length to transverse dimension, for example diameter. For example, cores can optionally be provided with transverse dimensions or diameters ranging from 0.5 millimeter to 5.0 millimeter or any range therein. Cores can optionally be provided with transverse dimensions or diameters ranging from 0.1 millimeter to 25 millimeters or any range therein. Cores can optionally be provided with aspect ratios up to the order of 1000. Cores can optionally be provided with aspect ratios ranging from 100 to 1000, or any range therein. The apparatus and method of invention enable microarray block core lengths to be much longer than conventionally done, and more uniform in length than conventionally done. In this regard, for example, typical depths of cores, for example as shown in FIG.1, are at most three to five millimeters, while the apparatus and method of the invention permit microarray blocks with core depths of 20 to 50 millimeters, thus enabling greater efficiencies upon histologic sectioning.

The method of the invention can facilitate techniques for maximizing the uniformity of the resulting cores. In this regard, a variety of mixing and/or concentrating techniques, for example vortex mixing and centrifugation, are enabled. In addition, minimization of air bubbles introduced to the sample is enabled by the ability of the apparatus and method of the invention to include the application of vacuum and/or heat for dissolution of gases, centrifugation for bubbles removal due to buoyancy, inversion of the casting element and container element assembly, for example as shown in FIGS. 9-12, just prior to completion of the stroke, for example as shown in FIGS. 9D, 10D, 11D, or 12D, in order to sequester air bubbles from entering the lumen of the casting element, or any combination of the foregoing.

The method of the invention can facilitate maintaining sterility and purity of the core since the components, for example the casting element and container element for example as shown in FIGS. 9-12, can be simple, disposable components.

The method of the invention permits the mass production of microarray blocks and slides produced therefrom. Such mass production is advantageous for many applications, including the validation and scientific control of diagnostic tests or assays. For these applications, and possibly others, the ability to mass produce perhaps many thousands of replicate sections with highly repeatable biological and physical characteristics is advantageous. These characteristics optionally include the uniformity of the properties and of the spatial distribution within a given core of the array. The present invention permits the production of a high quantity of replicate sections of high quality, while minimizing waste of precious surgical or synthesized specimens. The cores that are produced by the method of the invention, which can optionally be referred to as free-standing cores, are stable for long-term storage prior to incorporation in the construction of microarray blocks. This feature greatly facilitates efficient mass production, uniformity, and quality control, by enabling processing in large batches or lots.

## Claims

1. A method for making a microarray block, comprising:
providing a recipient block (201, 306) having an internal bore (221) having a length;
providing a cylindrical core formed of a biological sample and a liquid carrier medium, the cylindrical core having a length and the biological sample being distributed along the length of the cylindrical core,
dehydrating the cylindrical core and infiltrating the cylindrical core with paraffin to provide a free-standing cylindrical core (382), the free-standing cylindrical core (382) having a length that is greater than the length of the internal bore (221); and
disposing a portion of the length of the free-standing cylindrical core (382) in the internal bore (221) of the recipient block (201, 306) to form the microarray block and
wherein the step of dehydrating the cylindrical core and infiltrating the cylindrical core (382) with paraffin is for forming a bond between the portion of the free-standing cylindrical core (382) having been disposed in the internal bore (221) and the recipient block (201, 306) of sufficient strength to enable sections with physical integrity to be cut from the microarray block for analysis.

2. The method of any preceding Claim, wherein the liquid carrier medium is selected from the group consisting of paraffin wax, the aqueous form of an agarose gel, an agarose-incorporating gel product such as the Histogel specimen processing gel of Fisher Scientific, a polymeric medium, a plastic compound, an acrylic, glycol methacrylate, an epoxy, a bisphenol-A-based epoxy, a cyclohexene dioxide-based epoxy, an ultraviolet light-curable plastic, a UV-curable polyester, a polyester plastic medium, EUKITT UV mounting media of ORSA-tec, a histology mounting media and any combination of the foregoing.

3. The method of any preceding Claim, wherein the recipient block (201, 306) is formed from a material selected from the group consisting of paraffin wax, an agarose gel, an agarose-incorporating gel product such as the Histogel specimen processing gel of Fisher Scientific, a polymeric medium, a plastic compound, an acrylic, glycol methacrylate, an epoxy, a bisphenol-A-based epoxy, a cyclohexene dioxide-based epoxy, an ultraviolet light-curable plastic, a UV-curable polyester, a polyester plastic medium, EUKITT UV mounting media of ORSA-tec, a histology mounting media and a combination of the foregoing.

4. The method of any preceding Claim, wherein the carrier medium includes or is an agarose gel and the material of the recipient block (201, 306) includes or is paraffin.

5. The method of any preceding Claim, wherein the recipient block (201, 306) has a plurality of internal bores (221) and wherein the disposing step includes disposing a portion of the free-standing cylindrical core (382) into each of the plurality of internal bores (221).

6. The method of any preceding Claim, further comprising slicing the microarray block into a plurality of sections each containing a plurality of sections of the portion of the free-standing cylindrical core (382) having been disposed in the internal bore (221).

7. The method of any preceding Claim, wherein the free-standing cylindrical core (382) has a length and a transverse dimension and a ratio of length to transverse dimension: up to the order of 1000; or ranging from 100 to 1000.

8. The method of any preceding Claim, wherein the internal bore (221) of the recipient block (201, 306) has a cross sectional shape, further comprising the steps of:
providing a mold (10, 322) having a cylindrical bore (12), the mold (10, 322) having opposite first and second ends (41, 42), the first end of the mold (10, 322) having an opening (51) of the cylindrical bore (12) of the mold (10, 322),
introducing the biological sample and the liquid carrier medium through the opening (51),
solidifying the liquid carrier medium in the mold (10, 322) to form the cylindrical core of the biological sample and the carrier medium, and
removing the cylindrical core (382) from the mold (10, 322) to provide the cylindrical core formed of the biological sample and the liquid carrier medium.

9. The method of Claim 8, further comprising a step of mixing the biological sample and the liquid carrier medium within the cylindrical bore (12) of the mold (10, 322).

10. The method of Claim 8, further comprising a step of mixing the biological sample and the liquid carrier medium before the introducing step.

11. The method of Claim 10, wherein the biological sample and the liquid carrier medium are mixed in a container (14, 20) to form a mixture, the mixture introduced through the opening (51).

12. The method of any of Claims 8 to 11, wherein the solidifying step comprises heating the biological sample and the liquid carrier medium in the mold (10, 322).

13. The method of any of Claims 8 to 12, wherein the biological sample and the liquid carrier medium are introduced through the opening (51) as a pressure-driven flow.

14. The method of any Claims 8 to 13, wherein the cylindrical bore (12) has a cross sectional shape equal to the cross sectional shape of the internal bore (221).

15. The method of any preceding claim, further comprising a step of placing at least a portion of the free-standing cylindrical core (382) in long-term storage before the disposing step.

## Patentansprüche

1. Verfahren zum Herstellen eines Mikroarray-Blocks, umfassend:
Bereitstellen eines Aufnahmeblocks (201, 306), der eine Innenbohrung (221) aufweist, die eine Länge aufweist;
Bereitstellen eines zylindrischen Kerns, der aus einer biologischen Probe und einem flüssigen Trägermedium gebildet wird, wobei der zylindrische Kern eine Länge aufweist und die biologische Probe entlang der Länge des zylindrischen Kerns verteilt ist,
Dehydrieren des zylindrischen Kerns und Infiltrieren des zylindrischen Kerns mit Paraffin, um einen freistehenden zylindrischen Kern (382) bereitzustellen, wobei der freistehende zylindrische Kern (382) eine Länge aufweist, die größer als die Länge der Innenbohrung (221) ist; und
Anordnen eines Abschnitts der Länge des freistehenden zylindrischen Kerns (382) in der Innenbohrung (221) des Aufnahmeblocks (201,306), um den Mikroarray-Block zu bilden, und
wobei der Schritt vom Dehydrieren des zylindrischen Kerns und Infiltrieren des zylindrischen Kerns (382) mit Paraffin dazu dient, eine Bindung zwischen dem Abschnitt des freistehenden zylindrischen Kerns (382), der in der Innenbohrung (221) angeordnet wurde, und dem Aufnahmeblock (201, 306) von ausreichender Festigkeit zu bilden, um zu ermöglichen, dass Bereiche mit physikalischer Integrität aus dem Mikroarray-Block zur Analyse herausgeschnitten werden.

2. Verfahren nach einem vorstehenden Anspruch, wobei das flüssige Trägermedium aus der Gruppe ausgewählt ist, bestehend aus Paraffinwachs, der wässrigen Form eines Agarosegels, einem Agarose-haltigen Gelprodukt wie dem Histogel-Probenverarbeitungsgel von Fisher Scientific, einem polymeren Medium, einer Kunststoffverbindung, einem Acrylat, Glykolmethacrylat, einem Epoxidharz, einem Bisphenol-A-basierten Epoxidharz, einem Cyclohexendioxid-basierten Epoxidharz, einem UV-härtenden Kunststoff, einem UV-härtenden Polyester, einem Polyester-Kunststoffmedium, EUKITT UV-Eindeckmedium von ORSA-tec, einem Histologie-Eindeckmedium und einer beliebigen Kombination der vorgenannten.

3. Verfahren nach einem vorstehenden Anspruch, wobei der Aufnahmeblock (201, 306) aus einem Material gebildet ist, das aus der Gruppe ausgewählt ist, bestehend aus Paraffinwachs, einem Agarosegel, einem Agarose-haltigen Gelprodukt wie dem Histogel-Probenverarbeitungsgel von Fisher Scientific, einem polymeren Medium, einer Kunststoffverbindung, einem Acrylat, Glykolmethacrylat, einem Epoxidharz, einem Bisphenol-A-basierten Epoxidharz, einem Cyclohexendioxid-basierten Epoxidharz, einem UV-härtenden Kunststoff, einem UV-härtenden Polyester, einem Polyester-Kunststoffmedium, EUKITT UV-Eindeckmedium von ORSA-tec, einem Histologie-Eindeckmedium und einer Kombination der vorgenannten.

4. Verfahren nach einem vorstehenden Anspruch, wobei das Trägermedium ein Agarosegel beinhaltet oder ist und das Material des Empfängerblocks (201, 306) Paraffin beinhaltet oder ist.

5. Verfahren nach einem vorstehenden Anspruch, wobei der Aufnahmeblock (201, 306) mehrere Innenbohrungen (221) aufweist und der Anordnungsschritt ein Anordnen eines Abschnitts des freistehenden zylindrischen Kerns (382) in jede der mehreren Innenbohrungen (221) beinhaltet.

6. Verfahren nach einem vorstehenden Anspruch, ferner umfassend ein Zerteilen des Mikroarray-Blocks in mehrere Bereiche, von denen jeder mehrere Bereiche des Abschnitts des freistehenden zylindrischen Kerns (382) enthält, der in der Innenbohrung (221) angeordnet wurde.

7. Verfahren nach einem vorstehenden Anspruch, wobei der freistehende zylindrische Kern (382) eine Länge und eine Querabmessung sowie ein Verhältnis von Länge zu Querabmessung aufweist: bis zur Größenordnung von 1000; oder im Bereich von 100 bis 1000.

8. Verfahren nach einem vorstehenden Anspruch, wobei die Innenbohrung (221) des Aufnahmeblocks (201, 306) eine bestimmte Querschnittsform aufweist, ferner umfassend die Schritte:
Bereitstellen einer Form (10, 322), die eine zylindrische Bohrung (12) aufweist, wobei die Form (10, 322) gegenüberliegende erste und zweite Enden (41, 42) aufweist, wobei das erste Ende der Form (10, 322) eine Öffnung (51) der zylindrischen Bohrung (12) der Form (10, 322) aufweist,
Einbringen der biologischen Probe und des flüssigen Trägermediums durch die Öffnung (51),
Verfestigen des flüssigen Trägermediums in der Form (10, 322), um den zylindrischen Kern der biologischen Probe und des Trägermediums zu bilden, und
Entnehmen des zylindrischen Kerns (382) aus der Form (10, 322), um den zylindrischen Kern, der aus der biologischen Probe und dem flüssigen Trägermedium gebildet ist, bereitzustellen.

9. Verfahren nach Anspruch 8, ferner umfassend einen Schritt vom Mischen der biologischen Probe und des flüssigen Trägermediums innerhalb der zylindrischen Bohrung (12) der Form (10, 322).

10. Verfahren nach Anspruch 8, ferner umfassend einen Schritt vom Mischen der biologischen Probe und des flüssigen Trägermediums vor dem Einbringungsschritt.

11. Verfahren nach Anspruch 10, wobei die biologische Probe und das flüssige Trägermedium in einem Behälter (14, 20) gemischt werden, um ein Gemisch zu bilden, wobei das Gemisch durch die Öffnung (51) eingebracht wird.

12. Verfahren nach einem der Ansprüche 8 bis 11, wobei der Verfestigungsschritt ein Erhitzen der biologischen Probe und des flüssigen Trägermediums in der Form (10, 322) umfasst.

13. Verfahren nach einem der Ansprüche 8 bis 12, wobei die biologische Probe und das flüssige Trägermedium durch die Öffnung (51) als ein druckgetriebener Strom eingebracht werden.

14. Verfahren nach einem der Ansprüche 8 bis 13, wobei die zylindrische Bohrung (12) eine Querschnittsform aufweist, die der Querschnittsform der Innenbohrung (221) entspricht.

15. Verfahren nach einem vorstehenden Anspruch, ferner umfassend einen Schritt vom Platzieren mindestens eines Abschnitts des freistehenden zylindrischen Kerns (382) in Langzeitlagerung vor dem Anordnungsschritt.

## Revendications

1. Procédé de fabrication d'un bloc de microréseau, comprenant :
la fourniture d'un bloc récepteur (201, 306) présentant un alésage interne (221) présentant une longueur ;
la fourniture d'un noyau cylindrique formé d'un échantillon biologique et d'un milieu porteur liquide, le noyau cylindrique présentant une longueur et l'échantillon biologique étant réparti sur toute la longueur du noyau cylindrique,
la déshydratation du noyau cylindrique et l'infiltration du noyau cylindrique avec de la paraffine pour fournir un noyau cylindrique autoportant (382), le noyau cylindrique autoportant (382) présentant une longueur supérieure à la longueur de l'alésage interne (221) ; et
la disposition d'une partie de la longueur du noyau cylindrique autoportant (382) dans l'alésage interne (221) du bloc récepteur (201,306) pour former le bloc de microréseau et
dans lequel l'étape de déshydratation du noyau cylindrique et d'infiltration du noyau cylindrique (382) avec de la paraffine sert à former une liaison entre la partie du noyau cylindrique autoportant (382) ayant été disposée dans l'alésage interne (221) et le bloc récepteur (201, 306) d'une résistance suffisante pour permettre de découper des sections avec une intégrité physique du bloc de microréseau pour analyse.

2. Procédé selon une quelconque revendication précédente, dans lequel le milieu porteur liquide est choisi parmi le groupe constitué de cire de paraffine, de la forme aqueuse d'un gel d'agarose, d'un produit de gel incorporant de l'agarose tel que le gel de traitement d'échantillons Histogel de Fisher Scientific, d'un milieu polymère, d'un composé plastique, d'un acrylique, d'un méthacrylate de glycol, d'un époxy, d'un époxy à base de bisphénol A, d'un époxy à base de dioxyde de cyclohexène, d'un plastique durcissable aux ultraviolets, d'un polyester durcissable aux UV, d'un milieu plastique polyester, des milieux de montage UV EUKITT d'ORSA-tec, d'un milieu de montage histologique et de toute combinaison des éléments précédents.

3. Procédé selon une quelconque revendication précédente, dans lequel le bloc récepteur (201, 306) est formé à partir d'un matériau choisi parmi le groupe constitué de cire de paraffine, d'un gel d'agarose, d'un produit de gel incorporant de l'agarose tel que le gel de traitement d'échantillons Histogel de Fisher Scientific, d'un milieu polymère, d'un composé plastique, d'un acrylique, d'un méthacrylate de glycol, d'un époxy, d'un époxy à base de bisphénol A, d'un époxy à base de dioxyde de cyclohexène, d'un plastique durcissable aux ultraviolets, d'un polyester durcissable aux UV, d'un milieu plastique polyester, des milieux de montage UV EUKITT d'ORSA-tec, d'un milieu de montage histologique et une combinaison des éléments précédents.

4. Procédé selon une quelconque revendication précédente, dans lequel le milieu porteur inclut ou est un gel d'agarose et le matériau du bloc récepteur (201, 306) inclut ou est de la paraffine.

5. Procédé selon une quelconque revendication précédente, dans lequel le bloc récepteur (201, 306) présente une pluralité d'alésages internes (221) et dans lequel l'étape de disposition inclut la disposition d'une partie du noyau cylindrique autoportant (382) dans chacun de la pluralité d'alésages internes (221).

6. Procédé selon une quelconque revendication précédente, comprenant en outre le découpage du bloc de microréseau en une pluralité de sections contenant chacune une pluralité de sections de la partie du noyau cylindrique autoportant (382) ayant été disposée dans l'alésage interne (221).

7. Procédé selon une quelconque revendication précédente, dans lequel le noyau cylindrique autoportant (382) présente une longueur et une dimension transversale et un rapport de longueur à dimension transversale : jusqu'à l'ordre de 1000 ; ou dans la plage de 100 à 1000.

8. Procédé selon une quelconque revendication précédente, dans lequel l'alésage interne (221) du bloc récepteur (201, 306) présente une forme de section transversale, comprenant en outre les étapes de :
fourniture d'un moule (10, 322) présentant un alésage cylindrique (12), le moule (10, 322) présentant des première et seconde extrémités opposées (41, 42), la première extrémité du moule (10, 322) présentant une ouverture (51) de l'alésage cylindrique (12) du moule (10, 322),
introduction de l'échantillon biologique et du milieu porteur liquide par l'ouverture (51),
solidification du milieu porteur liquide dans le moule (10, 322) pour former le noyau cylindrique de l'échantillon biologique et du milieu porteur, et
retrait du noyau cylindrique (382) du moule (10, 322) pour fournir le noyau cylindrique formé de l'échantillon biologique et du milieu porteur liquide.

9. Procédé selon la revendication 8, comprenant en outre une étape de mélange de l'échantillon biologique et du milieu porteur liquide dans l'alésage cylindrique (12) du moule (10, 322).

10. Procédé selon la revendication 8, comprenant en outre une étape de mélange de l'échantillon biologique et du milieu porteur liquide avant l'étape d'introduction.

11. Procédé selon la revendication 10, dans lequel l'échantillon biologique et le milieu porteur liquide sont mélangés dans un récipient (14, 20) pour former un mélange, le mélange étant introduit par l'ouverture (51).

12. Procédé selon l'une quelconque des revendications 8 à 11, dans lequel l'étape de solidification comprend le chauffage de l'échantillon biologique et du milieu porteur liquide dans le moule (10, 322).

13. Procédé selon l'une quelconque des revendications 8 à 12, dans lequel l'échantillon biologique et le milieu porteur liquide sont introduits par l'ouverture (51) sous la forme d'un flux entraîné par la pression.

14. Procédé selon l'une quelconque des revendications 8 à 13, dans lequel l'alésage cylindrique (12) présente une forme de section transversale égale à la forme de section transversale de l'alésage interne (221).

15. Procédé selon une quelconque revendication précédente, comprenant en outre une étape de placement d'au moins une partie du noyau cylindrique autoportant (382) dans un stockage à long terme avant l'étape de disposition.
